# EUROPÄISCHE PATENTANMELDUNG

(11) **EP 4 831 016 A1**
(43) Veröffentlichungstag der Anmeldung: **28.10.2026**
(21) Anmeldenummer: 25172012.4
(22) Anmeldetag: 23.04.2025
(51) Int. Cl.: B60S 3/04

(54) **SICHERHEITSVORRICHTUNG UND WASCHPORTAL**

(71) Anmelder: WashTec Holding GmbH, 86153 Augsburg (DE)
(72) Erfinder: Brudniok, Sven, 86853 Langerringen (DE)
(74) Vertreter: Schwarz, Claudia

(57) **Zusammenfassung**

Die Erfindung betrifft eine Sicherheitsvorrichtung für eine Portalwaschanlage mit einem entlang einer Bewegungsrichtung fahrbaren Waschportal. Die Vorrichtung umfasst eine erste und eine zweite Kollisionserkennungseinrichtung, die jeweils ein Kollisionselement und eine Detektoreinrichtung enthalten. Die Detektoreinrichtungen sind mechanisch mit den Kollisionselementen gekoppelt und dazu ausgebildet, bei einer Krafteinwirkung eine horizontale Verlagerung der Kollisionselemente zu ermöglichen und diese Bewegung zu detektieren. Mindestens ein Koppelelement verbindet die beiden Kollisionselemente mechanisch beweglich und überträgt eine auf das Koppelelement einwirkende mechanische Kraft zumindest teilweise auf eines oder beide Kollisionselemente. Dadurch kann eine Kollision sowohl direkt an den Kollisionselementen als auch am Koppelelement erkannt werden, um eine frühzeitige Detektion von Hindernissen oder Personen im Bewegungsbereich des Waschportals zu ermöglichen.

## Beschreibung

### Technisches Gebiet

Die vorliegende Erfindung betrifft eine Sicherheitsvorrichtung für eine Portalwaschanlage. Die Sicherheitsvorrichtung ist zur vorauseilenden Detektion einer Kollision zwischen einem Portal der Portalwaschanlage mit einem Objekt, insbesondere einer Person, ausgelegt. Zudem betrifft die Erfindung ein Waschportal, das mit einer solchen Sicherheitsvorrichtung ausgestattet ist und eine Portalwaschanlage.

### Hintergrund

Portalwaschanlagen sind automatisierte Einrichtungen zur Fahrzeugreinigung, bei denen das Fahrzeug während des Waschvorgangs stillsteht. Das Waschportal, insbesondere eine bewegliche Rahmenkonstruktion, fährt entlang des stationären Fahrzeugs und führt die verschiedenen Reinigungsschritte durch.

Das Fahrzeug wird zunächst in die Anlage gefahren und an einer vorgesehenen Position abgestellt. Der Fahrer stellt den Motor ab, verlässt das Fahrzeug und tritt aus dem Bereich, in dem das Fahrzeug steht. In der Regel wird der Waschvorgang anschließend von außen gestartet.

Aufgrund der begrenzten Platzverhältnisse ist ein Aufenthalt von Personen im Waschbereich während des Betriebs nicht vorgesehen. In vielen Anlagen ist dies aus Sicherheitsgründen ausdrücklich untersagt.

Während des Waschvorgangs müssen Kollisionen des beweglichen Waschportals mit Objekten, insbesondere Lebewesen oder Gegenständen verhindert werden. Besonders kritische Situationen können entstehen, wenn sich unerwartet Gegenstände im Waschbereich befinden oder Personen unbefugt den Bereich betreten.

Zur Vermeidung von Kollisionen zwischen dem Waschportal und einem Fahrzeug oder Fahrzeugteilen, wie beispielsweise herausstehenden Seitenspiegeln oder ähnlichen Anbauteilen, sind bereits verschiedene Lösungen bekannt.

Ein System zur Kollisionserkennung ist aus der DE 10 2022 102 613 A1 bekannt. Diese Anmeldung beschreibt eine Sicherheitsvorrichtung mit einer pendelnd herabhängenden Kollisionsstange, die eine Kollision mit einem Objekt detektieren kann. Die Stange ist derart am Waschportal angeordnet, dass sie eine Kollision bereits vorauseilend erkennt, bevor das (eigentliche) Waschportal auf das Objekt trifft. Dadurch soll das Waschportal rechtzeitig gestoppt werden, sodass eine Kollision zwischen dem Portal selbst und dem erkannten Objekt verhindert wird.

Konventionelle Systeme zur Kollisionserkennung sind bevorzugt darauf ausgerichtet, Kollisionen mit Objekten zu detektieren. Insbesondere überwachen diese Systeme häufig eine Kollision in Richtung der Innenseite des Waschportals, also der dem zu reinigenden Fahrzeug zugewandten Seite. Dies ist insbesondere vorteilhaft, um Kollisionen mit Anbauteilen des Fahrzeugs, wie Außenspiegeln, zu erkennen. Ein Personenschutz kann mit einer solchen Anlage allerdings nicht umfassend ermöglicht werden.

Befindet sich jedoch neben dem Fahrzeug oder in einem anderen Bereich des Arbeitsraums und insbesondere an der Außenseite des Waschportals ein weiteres gegenständliches Objekt oder sogar eine Person, stoßen solche Systeme an ihre Grenzen. Da sie überwiegend auf den Bereich zwischen dem Waschportal und dem Fahrzeug fokussiert sind, bieten sie nur eingeschränkte Möglichkeiten zur Erkennung von Kollisionen mit anderen Objekten oder Personen außerhalb dieses Bereichs.

Insbesondere sind konventionelle Systeme nur bedingt für den Personenschutz geeignet. Kritische Situationen können entstehen, wenn sich eine Person nach dem Start des Waschvorgangs erneut in den Arbeitsraum begibt, beispielsweise um ein offenes Fenster zu schließen oder einen Gegenstand aus dem Fahrzeug zu holen. In solchen Fällen besteht die Gefahr, dass das bewegliche Waschportal mit der Person kollidiert, ohne dass die vorhandenen Sicherheitssysteme die Gefahr rechtzeitig erfassen und darauf reagieren können.

Ausgehend hiervon ist es eine Aufgabe der vorliegenden Erfindung, das Sicherheitskonzept einer Portalwaschanlage zu verbessern, insbesondere im Hinblick auf den Schutz von Personen. Dazu soll eine Sicherheitsvorrichtung bereitgestellt werden, die nicht nur Kollisionen mit am Fahrzeug angebrachten Gegenständen, sondern insbesondere auch mit Personen vermeiden kann.

Gemäß einem ersten Aspekt wird die Aufgabe gelöst durch eine Sicherheitsvorrichtung für eine Portalwaschanlage gemäß Anspruch 1, ein Waschportal mit einer solchen Sicherheitsvorrichtung und eine Portalwaschanlage gemäß den Merkmalen der unabhängigen Patentansprüche. Vorteilhafte Ausführungsformen sind Gegenstand der abhängigen Patentansprüche.

Die hier vorgeschlagene Sicherheitsvorrichtung ist insbesondere für ein Waschportal vorgesehen, das entlang einer Bewegungsachse in zwei Bewegungsrichtungen (vor und zurück) verfahrbar ist. Die Sicherheitsvorrichtung kann insbesondere ausgebildet sein, eine potentielle oder drohende Kollision zwischen einem Kollisionskörper und dem Waschportal vorauseilend zu erfassen, um eine tatsächliche Kollision mit dem Waschportal zu vermeiden. Dies wird möglich, indem im Kollisionsfall eine Kollision zwischen dem Kollisionskörper und der Sicherheitsvorrichtung erfasst wird, um eine Kollision zwischen dem Kollisionskörper und dem Waschportal zu verhindern.

Mit der vorgeschlagenen Lösung wird es möglich, den Überwachungsbereich über die direkte Fahrzeugkontur hinaus zu erweitern, so dass auch unerwartete Situationen erkannt werden können, beispielsweise wenn sich eine Person nach dem Start des Waschvorgangs erneut in den Arbeitsraum begibt.

Durch eine solche Sicherheitsvorrichtung kann der Personenschutz insbesondere auch während des Betriebs der Portalwaschanlage deutlich verbessert und das Risiko von Kollisionen mit dem beweglichen Waschportal reduziert werden.

Bei dem Kollisionskörper kann es sich um ein insbesondere gegenständliches Objekt (z.B. Objekt separat vom Fahrzeug, z.B. Kanister oder Objekt als insbesondere bewegliches Bauteil des Fahrzeugs, z.B. geöffnete Fahrzeugtüre) oder um ein Lebewesen (Mensch oder Tier) handeln. Insbesondere dient die Sicherheitsvorrichtung zum Personenschutz.

Die Sicherheitsvorrichtung umfasst eine erste Kollisionserkennungseinrichtung, eine zweite Kollisionserkennungseinrichtung und mindestens ein Koppelelement.

Die erste Kollisionserkennungseinrichtung umfasst ein erstes Kollisionselement und eine erste Detektoreinrichtung. Die erste Detektoreinrichtung ist mechanisch mit dem ersten Kollisionselement gekoppelt. Sie ist dazu ausgebildet, bei einer mechanischen Krafteinwirkung auf das erste Kollisionselement eine vorzugsweise horizontale Verlagerung (laterale Verschiebung und/oder Verschwenkung bzw. Rotation) desselben zu ermöglichen. Zudem detektiert sie die Krafteinwirkung auf das erste Kollisionselement.

Die zweite Kollisionserkennungseinrichtung umfasst ein zweites Kollisionselement und eine zweite Detektoreinrichtung. Die zweite Detektoreinrichtung ist mechanisch mit dem zweiten Kollisionselement gekoppelt. Sie ist dazu ausgebildet, bei einer mechanischen Krafteinwirkung auf das zweite Kollisionselement eine vorzugsweise horizontale Verlagerung desselben entgegen der Bewegungsrichtung des Waschportals zu ermöglichen. Zudem detektiert sie die Krafteinwirkung auf das zweite Kollisionselement.

Der Begriff "horizontale Verlagerung" des ersten und/oder zweiten (insbesondere vertikale angeordneten) Kollisionselementes (und insbesondere die Anspruchsformulierung: "eine vorzugsweise horizontale Verlagerung des zweiten Kollisionselements entgegen der Bewegungsrichtung des Waschportals") meint hier Folgendes:
Bei Einwirken einer mechanischen Kraft auf das erste Kollisionselement oder ein anderes Bauteil der Sicherheitsvorrichtung durch Kollision mit einem Kollisionskörper ist das erste Kollisionselement derart mit der ersten Detektoreinrichtung mechanisch gekoppelt, dass das erste Kollisionselement eine Bewegung in einer horizontalen Ebene (Veränderung der X- und/oder Y-Koordinaten des Kollisionselementes in der Draufsicht) ausführen kann, während die Höhenposition des Kollisionselementes (Z-Koordinate) im Wesentlichen konstant bleibt. "Im Wesentlichen" meint hier, dass eine insignifikante Bewegung in der Z-Achse (vertikale Achse) aufgrund der pendelnden Aufhängung des ersten Kollisionselementes bei einer Pendelbewegung erfolgt; diese jedoch relativ zu der horizontalen Bewegung vernachlässigbar ist.

Beim Einwirken einer mechanischen Kraft auf das zweite Kollisionselement oder ein anderes Bauteil der Sicherheitsvorrichtung durch Kollision mit einem Kollisionskörper ist das zweite Kollisionselement derart mit der zweiten Detektoreinrichtung mechanisch gekoppelt, dass das zweite Kollisionselement eine Bewegung in einer horizontalen Ebene (Veränderung der X- und/oder Y-Koordinaten des Kollisionselementes in der Draufsicht) ausführen kann, während die Höhenposition des Kollisionselementes (Z-Koordinate) im Wesentlichen konstant bleibt (im Wesentlichen meint auch hier, dass die vertikale Bewegung vernachlässigbar ist in Relation zur horizontalen Bewegung).

Die erste und/oder zweite Detektoreinrichtung ist vorzugsweise fest oder starr mit dem Waschportal verbunden und dazu ausgebildet, eine zu dem Waschportal relative Bewegung des ersten und/oder zweiten Kollisionselements bzw. des ersten und/oder zweiten Schieberelementes zu ermöglichen und diese zu detektieren. Ein Sensorelement kann Bestandteil der Detektoreinrichtung sein. Die Detektoreinrichtung kann mehrere Bestandeile aufweisen. Die Bestandeile der Detektoreinrichtung können an unterschiedlichen Bauteilen des Waschportals und/oder der Sicherheitsvorrichtung angeordnet sein.

Es kann ein erstes/zweites Schieberelement vorgesehen sein, das fest oder starr an dem ersten bzw. zweiten Kollisionselement befestigt ist und/oder sich relativ zur ersten und/oder zweiten Detektoreinrichtung bewegen kann, wobei diese Relativbewegung vom jeweiligen Sensorelement erfasst wird. Das jeweilige Schieberelement ist bewegbar über zumindest ein Lagerelement (z.B. Zapfen) in einer Führungseinrichtung gelagert und/oder in dieser Führungseinrichtung der ersten und/oder zweiten Detektoreinrichtung geführt. Die Relativbewegung kann vorzugsweise durch eine lineare Verschiebung des Schieberelements der ersten und/oder zweiten Detektoreinrichtung relativ zu der Führungseinrichtung der ersten und/oder zweiten Kollisionserkennungseinrichtung erfolgen. Alternativ oder kumulativ kann die Relativbewegung durch eine Rotation des Schieberelements um ein Lagerelement, beispielsweise einen Zapfen, erfolgen.

Bei einer Kollision erfährt das erste und/oder zweite Kollisionselement eine äußere Krafteinwirkung, wodurch sich das Schieberelement relativ zur Führungseinrichtung der Detektoreinrichtung und/oder zur Detektoreinrichtung bewegt. Diese Relativbewegung wird vom Sensor erfasst. Die Kollisionskraft, die auf das Schieberelement wirkt, wird nicht direkt auf die Detektoreinrichtung übertragen, da diese starr oder fest am Waschportal (bzw. dessen Rahmen) befestigt ist. Stattdessen wird die Kraft über das Schieberelement weitergeleitet, das über das Lagerelement, vorzugsweise einem Zapfen, mit der Detektoreinrichtung gekoppelt ist. Vorzugsweise wird die Kraft über das Schieberelement an eine Rückstelleinrichtung weitergeleitet. Die durch eine Kollision auf das Schieberelement übertragene Kraft führt also beispielsweise zu einer Verlagerung eines Gewichts welches als Rückstellgewicht eine Rückstellkraft der Rückstelleinrichtung ausbildet.

Die Führungseinrichtung in der Detektoreinrichtung dient der Führung des Schieberelements und kann ermöglichen, dass das erste und/oder zweite Kollisionselement ausgelenkt wird. Die Führungseinrichtung kann als Linearführung, beispielsweise in Form einer Schubladenführung mit Gleit- oder Wälzkörpern, oder als Drehgelenk zur gezielten Rotation des Verbindungselements ausgebildet sein oder als Kombination der beiden (z.B. eine Schubladenführung die zusätzlich rotatorisch um ein Drehgelenk verdrehbar ist). Alternativ kann es jede andere bekannte mechanische Führung umfassen, die eine translatorische und/oder rotatorische Relativbewegung eines Gegenstücks, insbesondere des Verbindungselements, ermöglicht, beispielsweise eine Gleitführung oder eine kombinierte Verschiebe-Drehführung.

Das Koppelelement kann um die Achse des ersten Kollisionselementes rotieren. Das Koppelelement kann sich lateral in einer Koppelstelle für das zweite Kollisionselement in einer Achse des Koppelelementes bewegen und um die Achse des zweiten Kollisionselementes rotieren. Das Schieberelement kann unabhängig davon um die Achse des ersten bzw. zweiten Lagerelementes rotieren.

Das Schieberelement kann vorzugsweise als linear verschiebbares Element alternativ oder kumulativ als drehbares Element, drehbar um ein Lagerelement, beispielsweise einen Zapfen, ausgebildet sein. Damit wird eine zuverlässige Erfassung unterschiedlicher Kollisionsszenarien ermöglicht.

Das Schieberelement wird durch das Lagerelement verschiebbar und/oder verdrehbar geführt. Eine laterale Verschiebung des Schieberelements relativ zu dem Lagerelement bzw. eine Verdrehung des Schieberelements relativ zu dem Lagerelement ist also möglich.

Die Führungseinrichtung kann als Gleitführung alternativ oder kumulativ als Drehführung ausgebildet sein, um die Relativbewegung des Schieberelements zu führen.

Das Koppelelement ist mit dem ersten Kollisionselement und dem zweiten Kollisionselement so mechanisch gekoppelt, dass eine Bewegung des Koppelelementes das erste Kollisionselement und/oder das zweite Kollisionselement mitbewegt und dabei weder auf das erste Kollisionselement noch auf das zweite Kollisionselement eine Kraft ausübt, die zu einem Verklemmen der Führung an der jeweiligen Detektionseinrichtung führen würde.

Das mindestens eine Koppelelement ist mechanisch mit dem ersten und dem zweiten Kollisionselement gekoppelt. Es ist jeweils beweglich mit dem ersten und dem zweiten Kollisionselement verbunden. Alternativ oder ergänzend ist es dazu ausgebildet, eine auf das Koppelelement einwirkende mechanische Kraft zumindest teilweise auf das erste Kollisionselement und/oder das zweite Kollisionselement zu übertragen.

Gemäß der vorliegenden Erfindung wird die durch die Kollision einwirkende Kraft als auslösender Faktor für die Bewegung des Schieberelements betrachtet. Die tatsächliche Bewegungsrichtung der Krafteinwirkung kann sich jedoch nicht ausschließlich aus der Kollisionskraft ergeben, sondern aus der Summe aller wirkenden Kräfte. Diese umfassen insbesondere eine auf das Schieberelement wirkende Rückstellkraft, Reibungskräfte an den Kontaktflächen infolge von Relativbewegungen sowie Führungskräfte des Schieberelements. Aufgrund dieser Kräfteverteilung resultiert in den meisten Fällen vorzugsweise entweder eine lineare Verschiebung oder eine Rotationsbewegung, z.B. um den Zapfen. In diesem Zusammenhang der mechanischen Kraftübertragung wir der Ausdruck "im Wesentlichen" angesehen als Summe aller wirkenden Kräfte.

Vorteilhafterweise können eine oder mehrere zeitgleiche Kollisionen durch die Sicherheitsvorrichtung erkannt werden, wobei die Krafteinwirkung auf die Sicherheitsvorrichtung dann aus der Summe der einzelnen Kollisionskräften entsteht.

Gemäß einem weiteren Aspekt ist ein Waschportal mit einer erfindungsgemäßen Sicherheitsvorrichtung vorgesehen. Das Waschportal kann zwei vertikale Stützen (auch Portalsäulen oder Säulen genannt) umfassen. An jeder der Stützen kann eine erfindungsgemäße Sicherheitsvorrichtung vorgesehen sein.

Gemäß noch einem weiteren Aspekt ist eine Portalwaschanlage mit einer erfindungsgemäßen Sicherheitsvorrichtung vorgesehen.

Die Sicherheitsvorrichtung kann als Rahmen- oder gerüstartige Konstruktion an einer Portalsäule des Waschportals fest oder abnehmbar befestigt sein. Die Sicherheitsvorrichtung kann mehrere separaten Bauteile umfassen. Die Sicherheitsvorrichtung kann relativ zur Portalsäule positionsfeste und positionsbewegliche Bauteile umfassen. Vorzugsweise ist die Sicherheitsvorrichtung fest an einer in Bewegungsrichtung gesehen Vorderseite und/oder an einer rückwärtigen Seite an einer Außenfläche der Portalsäule befestigt.

Die Sicherheitsvorrichtung dient dazu, Kollisionen mit einem Kollisionskörper zu erkennen, um eine Kollision des Kollisionskörpers mit dem Waschportal zu vermeiden.

Die Sicherheitsvorrichtung umfasst eine erste Kollisionserkennungseinrichtung mit einem ersten Kollisionselement und einer ersten Detektoreinrichtung. Das erste Kollisionselement kann in einer Vorderansicht gesehen an einer Innenkante (d.h. dem zu reinigenden Fahrzeug zugewandten Seite) der Portalsäule, insbesondere in einer Flucht mit dieser Innenkante, angeordnet sein. Die erste Kollisionserkennungseinrichtung ist in der Sicherheitsvorrichtung relativ zu der ersten Detektionseinrichtung bewegbar angeordnet.

Die Sicherheitsvorrichtung umfasst eine zweite Kollisionserkennungseinrichtung mit einem zweiten Kollisionselement und einer zweiten Detektoreinrichtung. Das zweite Kollisionselement kann in einer Vorderansicht gesehen an einer Außenkante (d.h. dem zu reinigenden Fahrzeug abgewandten Seite) der Portalsäule, insbesondere in einer Flucht mit dieser Außenkante, angeordnet sein. Die zweite Kollisionserkennungseinrichtung ist in der Sicherheitsvorrichtung relativ zu der zweiten Detektionseinrichtung bewegbar angeordnet.

Das zweite Kollisionselement und das erste Kollisionselement sind vorzugsweise parallel zueinander angeordnet.

Das zweite Kollisionselement und/oder das erste Kollisionselement ist in einer Ruhestellung (d.h. ohne äußere Krafteinwirkung) vorzugsweise vertikal ausgerichtet.

Alternativ oder ergänzend umfasst die Sicherheitsvorrichtung zumindest ein Koppelelement, vorzugsweise zwei Koppelelemente. Das zumindest eine Koppelelement ist vorzugsweise annährend horizontal ausgebildet und mechanisch mit dem ersten und zweiten Kollisionselement gekoppelt. Die Höhe, auf der das zumindest eine Koppelelement befestigt ist, kann variabel an die Betriebssituation der Portalwaschanlage angepasst werden. Vorzugweise wird die Höhe bestimmt durch zu erwartende Kollisionen.

Durch die Ausgestaltung der Sicherheitsvorrichtung wird es möglich, dass der gesamte Bereich der Vorderseite einer Waschportalsäule einschließlich einem ersten äußeren und einem zweiten äußeren Bereich, die sich jeweils über die Breite des Waschportals nach innen und außen erstrecken, sicherheitstechnisch abgedeckt wird (bzw. vor Kollisionen geschützt werden). Damit kann der gesamte Arbeitsbereich des Waschportals sicherheitstechnisch abgedeckt werden.

Vorzugsweise können die erste und zweite Kollisionserkennungseinrichtung einen unterschiedlichen Aufbau aufweisen, so dass die Sicherheitsvorrichtung in Bezug auf die beiden Kollisionserkennungseinrichtungen quasi asymmetrisch ausgebildet sein kann.

Alternativ können die erste und zweite Kollisionserkennungseinrichtung einen entsprechenden oder denselben Aufbau aufweisen, so dass die Sicherheitsvorrichtung in Bezug auf die beiden Kollisionserkennungseinrichtungen quasi symmetrisch ausgebildet sein kann.

Vorzugsweise ist die Sicherheitsvorrichtung an zumindest einer Vorderseite in Bewegungsrichtung des Waschportals angeordnet.

Eine Portalwaschanlage (im Folgenden auch kurz: Anlage) im Sinne der vorliegenden Erfindung ist eine automatisierte Reinigungseinrichtung für Fahrzeuge, bei der das Fahrzeug insbesondere während des gesamten Waschvorgangs stillstehen kann. Das Waschportal, das als zentrale bewegliche Einheit der Anlage dient, verfährt entlang des vorwiegend stationären Fahrzeugs oder relativ zu dem Fahrzeug und führt die einzelnen Reinigungsschritte durch.

Bei den Fahrzeugen kann es sich um Straßen-oder schienengebundene Fahrzeuge handeln. Die Fahrzeuge können insbesondere PKWs oder LKWs oder Züge sein.

Ein Waschportal im Sinne der vorliegenden Erfindung kann zwei (vorwiegend vertikale) Portalsäulen und eine diese verbindende Brücke umfassen. Das Waschportal kann in der Vorderansicht die Form eines umgedrehten U's aufweisen. Alternativ oder ergänzend kann typischerweise eine tragende Rahmenstruktur, an der verschiedene Reinigungseinrichtungen, wie rotierende Bürsten, Düsen, insbesondere Hochdruckdüsen oder andere Waschaggregate, angeordnet sind, vorgesehen sein. Während des Waschvorgangs bewegt sich das Waschportal entlang einer definierten Bewegungsrichtung in einer definierten (möglicherweise variierenden) Geschwindigkeit über das oder relativ zum Fahrzeug, um eine vollständige Reinigung zu gewährleisten.

Ein Waschportal weist aufgrund seiner Konstruktion eine erhebliche Masse auf, die je nach Ausführung viele hundert Kilogramm betragen kann und in einigen Fällen sogar zwei Tonnen oder mehr erreicht. Entsprechend sind für seine Bewegung leistungsstarke Antriebe erforderlich, die das Portal entlang der Bewegungsrichtung verfahren.

Beim Abbremsen eines in Bewegung befindlichen Waschportals entsteht ein nicht zu vernachlässigender Anhalteweg, da die Masse des Portals eine erhebliche Trägheit verursacht. Um eine Kollision mit einem Objekt im Arbeitsraum zu vermeiden, muss ein solches Objekt frühzeitig erkannt werden. Nur so kann der Anhaltevorgang innerhalb des verfügbaren Anhaltewegs eingeleitet und das Waschportal rechtzeitig, insbesondere vor der Kollision mit dem Kollisionskörper, gestoppt werden.

Als Arbeitsraum wird ein Raum oder Bereich im Umfeld der Anlage bezeichnet. Der Arbeitsraum kann sich insbesondere zwischen den beiden Portalsäulen und/oder außerhalb und/oder vor bzw. hinter zumindest einer der beiden Portalsäulen erstrecken. Da sich das Waschportal bewegt, erstreckt sich der Arbeitsraum zusätzlich in dem Bewegungsbereich (oder auch Verfahrbereich) des Waschportals. Dies ermöglicht die Erfassung eines Kollisionskörpers innerhalb und/oder außerhalb des Bereichs des Waschportals. Die Erfassung eines Kollisionskörpers erfolgt insbesondere in einem räumlichen Erfassungsbereich. Der Erfassungsbereich kann somit insbesondere ein Raum sein, der größer ist, als ein Raum, der sich über einer Grundfläche des Waschportals in der Draufsicht erstreckt. So kann der Erfassungsbereich beispielsweise auch Bereiche außerhalb des Waschportals oder deren Portalsäulen umfassen.

Besondere Beachtung erfordert die Gefahr einer Kollision des Waschportals mit einem Kollisionskörper, insbesondere einem Lebewesen, insbesondere einer Person. Zum einen kann eine solche Kollision erhebliche Verletzungen verursachen. Zum anderen unterscheidet sich das Kollisionsverhalten bei einer Person wesentlich von dem einer Kollision mit Fahrzeugteilen oder anderen Objekten.

Während herausragende Fahrzeugteile, wie Spiegel, typischerweise innerhalb eines begrenzten Bereichs an der dem Fahrzeug zugewandten Seite des Waschportals angeordnet sind, kann sich eine Person an ganz unterschiedlichen Stellen befinden. Eine Kollision kann nicht nur im Innenbereich zwischen Waschportal und Fahrzeug auftreten, sondern auch an einer Außenseite des Waschportals, also an einer Seite, die vom Fahrzeug abgewandt ist. Darüber hinaus kann sich eine Person auch unmittelbar vor dem beweglichen Portal aufhalten. Vorteilhafterweise werden all diese Kollisionsszenarien mit der hier vorgestellten Lösung erfasst.

Ein weiteres Merkmal bei der Erfassung von Personen im Unterschied zu Bauteilen oder Objekten des Fahrzeugs oder der Waschanlage selbst, betrifft die Höhe der möglichen Kollision. Während Fahrzeugteile meist in einem vorhersehbaren Höhenbereich liegen, kann eine Person an ganz unterschiedlichen Höhen mit dem Waschportal kollidieren. Eine stehende Person kann beispielsweise einen Arm ausstrecken und dadurch eine Kollision in einem höheren Bereich, etwa auf 1,5 m Höhe, auslösen. Ebenso ist es möglich, dass eine Person gestürzt ist und am Boden liegt, wodurch eine Kollision in einem sehr niedrigen Bereich erfolgen kann. Auch sitzende oder liegende Personen (z.B. Kinder) müssen sicher erfasst werden können, was mit der hier vorgeschlagenen Sicherheitsvorrichtung sichergestellt werden kann.

Hinzu kommt, dass sich eine oder auch mehrere Personen während des Waschvorgangs bewegen kann/können, beispielsweise aus Panik oder Schreck. Dadurch kann der genaue Kollisionspunkt mit dem Waschportal nicht zuverlässig vorhergesagt werden. Dies stellt zusätzliche Anforderungen an eine Sicherheitsvorrichtung, die in der Lage sein muss, Kollisionen unabhängig von ihrer Position frühzeitig zu detektieren.

Die Sicherheitsvorrichtung ist vorzugsweise beabstandet von einer Vorderseite des Portals, insbesondere der Portalsäule, angeordnet. Der Abstand ist dabei so gewählt, dass zwischen dem Zeitpunkt der Kollisionserfassung und dem Abschluss des Anhaltevorgangs des Waschportals nach Erfassen einer Kollision eine vollständige Abbremsung (bis zum Stillstand) des Portals sichergestellt werden kann, ohne zu einer Kollision zwischen dem Kollisionskörper und dem (eigentlichen) Waschportal (nicht deren Sicherheitsvorrichtung) zu führen.

In der Umgebung einer Waschanlage herrschen in der Regel anspruchsvolle Bedingungen. Schmutz, Feuchtigkeit und Waschflüssigkeiten können die Funktion optischer Sensoren, wie Lichtschranken oder Kamerasysteme, beeinträchtigen oder ihren Einsatz sogar gänzlich unmöglich machen. Daher ist die insbesondere mechanische Detektion von Kollisionen mittels vorauseilender Kollisionselemente eine besonders geeignete Lösung.

Ein solches Kollisionselement kann bei einer Berührung mit einem Kollisionskörper, z.B. einem Objekt oder einer Person, ein mechanisches Ereignis auslösen, beispielsweise eine Bewegung des Kollisionselements. Dieses Ereignis kann durch eine geeignete Detektoreinrichtung erfasst werden, um daraufhin den Anhaltevorgang des Waschportals einzuleiten.

Allerdings ergibt sich bei der Verwendung einzelner Kollisionselemente eine Einschränkung in der Überwachungsfläche. Ein einzelnes Kollisionselement kann immer nur einen begrenzten Bereich abdecken. So kann z.B. ein vertikales Kollisionselement in einer bestimmten Breite nur denjenigen Bereich auf Kollision überwachen, der sich vor dem Kollisionselement in der bestimmten Breite befindet. Steht z.B. eine Person seitlich neben dem Kollisionselement kann sie von diesem ohne die erfindungsgemäße Ausbildung des Koppelelementes nicht erfasst werden. Selbst wenn mehrere (z.B. vertikale) Kollisionselemente eingesetzt werden, bleibt die Überwachung auf bestimmte Stellen beschränkt, die sich aus der Anordnung (und Breite) der Kollisionselemente ergeben. Dies kann sich nachteilig auf die Zuverlässigkeit der Kollisionsdetektion bei Personen auswirken, da der genaue Kollisionsort aufgrund der zuvor geschilderten Bewegungsmöglichkeiten einer Person nicht vorhersehbar ist.

Die Längsachse der Kollisionselemente erstreckt sich vorzugsweise vertikal. Die Kollisionselemente sind insbesondere parallel zueinander angeordnet. Die Kollisionselemente sind insbesondere an deren unteren Enden vorzugsweise abgerundet ausgebildet.

Eine Idee der vorliegenden Erfindung besteht darin, neben mehreren, vorzugsweise zwei, Kollisionselementen zusätzlich mindestens ein Koppelelement vorzusehen. Eine Längsachse des Koppelelements verläuft vorzugsweise horizontal und/oder senkrecht zu den Kollisionselementen.

Das Koppelelement verbindet die Kollisionselemente mechanisch miteinander. Dadurch wird nicht nur eine Kollision erkannt, die direkt an einem der Kollisionselemente oder in einer Vorderansicht gesehen in einem Bereich vor dem Kollisionselement auftritt, sondern auch eine Kollision mit dem Koppelelement selbst kann erfasst werden. Alternativ oder ergänzend kann über das Koppelelement auch eine Kollision zwischen den (vertikalen) Kollisionselementen und/oder in einer Vorderansicht gesehen neben den (vertikalen) Kollisionselementen erfasst werden, also innerhalb und/oder außerhalb der (vertikalen) Kollisionselemente des Waschportals. Das Koppelelement ist an den Enden vorzugsweise abgerundet ausgebildet.

Bei einer Kollision mit dem Koppelelement wird eine mechanische Kraft im Wesentlichen auf mindestens eines der Kollisionselemente übertragen. An diesem Kollisionselement kann dann die Auswirkung der mechanischen Kraft, die insbesondere durch die Kollision der Sicherheitsvorrichtung mit einem Kollisionskörper verursacht ist, detektiert werden, wodurch eine Kollision registriert wird.

Auf diese Weise erweitert das Koppelelement den Überwachungsraum der Sicherheitsvorrichtung. Während herkömmliche Lösungen nur eine Detektion direkt an den Kollisionselementen ermöglichen, kann mit der erfindungsgemäßen Anordnung auch eine Kollision erfasst werden, die zwischen diesen Kollisionselementen oder außerhalb dieser auftritt.

Die Kollisionserkennungseinrichtungen umfassen jeweils ein Kollisionselement und eine Detektoreinrichtung. Das Kollisionselement ist ein Bauteil, das so angeordnet ist, dass es bei einer Bewegung des Waschportals als erstes eine Berührung mit einem Kollisionskörper, beispielsweise einer Person, hervorruft. Beispielsweise kann es sich um senkrecht oder annähernd senkrecht verlaufende Stangen handeln, die sich entlang des überwachenden Bereichs an dem Waschportal erstrecken.

Die Kollisionselemente sind so ausgestaltet, dass sie zwei wesentliche Anforderungen erfüllen: Einerseits sollen sie bei einer Kollision möglichst keine Beschädigung am Kollisionskörper hervorrufen, insbesondere keine Kratzer am Fahrzeug oder Verletzungen bei einer Person. Andererseits müssen sie hinreichend stabil und steif sein, um die Krafteinwirkung bei einer Kollision möglichst direkt und ohne Verzögerung weiterzugeben. Dadurch wird verhindert, dass sich die Kollisionselemente zunächst elastisch verformen, bevor eine Kraftübertragung zur Detektoreinrichtung erfolgt.

Die Detektoreinrichtung ist eine Konstruktion oder ein Bauteil, das in Wirkverbindung mit dem jeweiligen Kollisionselement oder anderen in Antwort auf eine Kollision bewegten Teilen der Sicherheitsvorrichtung steht und insbesondere fest bzw. starr mit dem Waschportal verbunden ist. Bei einer Kollision und der damit verbundenen Krafteinwirkung z.B. auf das erste und/oder zweite Kollisionselement ist dieses dazu ausgelegt, dieser Krafteinwirkung nachzugeben und eine Bewegung des Kollisionselements zu ermöglichen, die von der Detektoreinrichtung erfasst wird.

Insbesondere kann das Kollisionselement durch dessen Aufhängung so bewegt werden, dass es einem Kollisionskörper ausweichen kann. Dabei ist eine Bewegung des Kollisionselements in Richtung des (restlichen) Waschportals, insbesondere in Richtung der jeweiligen Stütze des Portals oder Portalsäule, ausdrücklich erlaubt und erwünscht.

Durch diese Bewegung kann das Kollisionselement nach der Detektion der Kollision während des eingeleiteten Bremsvorgangs dem Kollisionskörper ausweichen, bis das Waschportal zum Stillstand kommt. Dies trägt dazu bei, mögliche Schäden oder Verletzungen zu vermeiden.

Die jeweilige Detektoreinrichtung ist so ausgestaltet, dass sie bereits zu Beginn einer Krafteinwirkung auf das entsprechende Kollisionselement und/oder Koppelelement und somit zu Beginn der Bewegung des Kollisionselements in Richtung der jeweiligen Stütze des Portals das Kollisionsereignis erkennt.

Hierzu ist die Detektoreinrichtung mit einer geeigneten Sensorik ausgestattet, die die Auswirkungen der mechanischen Kraft auf das Kollisionselement registriert. Im Rahmen dieser Offenbarung wird unter "Krafteinwirkung" im Wesentlichen die Kraft verstanden, die durch die Kollision der Sicherheitsvorrichtung mit einem Kollisionskörper verursacht wird.

Im Rahmen dieser Offenbarung wird unter "Kollisionsereignis" eine Kollision der Sicherheitsvorrichtung mit einem Kollisionskörper (insbesondere Person) verstanden. Eine Kollision des Kollisionskörpers mit dem Waschportal kann durch Erfassung der Kollision mit der Sicherheitsvorrichtung und einer in Antwort darauf erfolgenden Abbremsung (Auslösung Anhaltevorgang) des Waschportals seitens einer Steuereinrichtung vermieden werden.

Sobald eine Kollision mit der Sicherheitsvorrichtung detektiert wird, kann das Kollisionsereignis durch eine geeignete Signalisierung ausgegeben werden. Bei einer direkten oder indirekten Krafteinwirkung auf das jeweilige Kollisionselement oder auf ein anderes Bauteil der Sicherheitsvorrichtung und der daraufhin ausgelösten Bewegung der Sicherheitsvorrichtung relativ zur jeweiligen Detektoreinrichtung, kann die Sensorik das mechanische Kollisionsereignis detektieren und optional für die weitere Verarbeitung bereitstellen, an Steuergeräte weiterleiten (insbesondere Steuergeräte des Waschportals) und/oder ausgeben (z.B. auf einer Benutzerschnittstelle). Dazu sind entsprechende Datenverbindungen vorgesehen (z.B. Feldbussysteme, wie CAN-Bus, Ethernet-basierte Systeme oder FlexRay etc.).

Grundsätzlich kann jede geeignete Sensorik eingesetzt werden, die eine solche Bewegung des Kollisionselementes zuverlässig erkennt. Bei der Bewegung kann es sich insbesondere um eine laterale Bewegung in einer horizontalen Ebene oder um eine Rotationsbewegung in einer horizontalen Ebene handeln. Die geeignete Sensorik zur Erfassung dieser Bewegung kann insbesondere durch Magnet- oder Induktionssensoren und/oder optische Sensoren o.ä. ausgebildet sein.

Aufgrund der anspruchsvollen Umgebungsbedingungen in einer Portalwaschanlage - insbesondere durch Feuchtigkeit, Schmutz und Waschflüssigkeiten - sind optische Systeme möglicherweise weniger geeignet, da sie durch Verschmutzungen beeinträchtigt werden können. Stattdessen kommen bevorzugt elektrische Sensoren zum Einsatz, beispielsweise Induktionsschalter oder ähnliche Schaltelemente, die robust gegenüber Umwelteinflüssen sind und eine zuverlässige Erfassung der Bewegung ermöglichen.

Die oben beschriebenen Kollisionselemente sind primär dazu ausgelegt, eine Kollision an einer bestimmten Position zu detektieren. Im Fall von senkrecht verlaufenden Stangen ermöglichen sie insbesondere eine Erfassung entlang eines linearen vertikalen Bereichs.

Um den Erfassungsbereich zu erweitern, sieht die vorliegende Erfindung mindestens ein Koppelelement vor. Dieses verbindet die beiden Kollisionselemente mechanisch miteinander und erstreckt sich bei vertikal verlaufenden Kollisionselementen vorzugsweise horizontal zwischen diesen und optional über das zweite Kollisionselement seitlich hinaus. Im letzteren Fall kragt das Koppelelement in einem Außenbereich des Waschportals seitlich nach außen aus.

Das mindestens eine Koppelelement ist so mit den Kollisionselementen gekoppelt, dass es weiterhin eine unabhängige Bewegung der Kollisionselemente zur individuellen Kollisionserfassung ermöglicht. Gleichzeitig führt eine Krafteinwirkung, insbesondere durch eine Kollision eines Kollisionskörpers mit dem Koppelelement, zu einer zumindest teilweisen Weiterleitung der Kraft auf mindestens eines der Kollisionselemente. Dadurch kann die jeweilige Detektoreinrichtung aktiviert und eine Kollision detektiert werden.

In einer möglichen Ausführungsform ist die mechanische Kopplung zwischen dem ersten Kollisionselement und dem mindestens einen Koppelelement sowie zwischen dem zweiten Kollisionselement und dem mindestens einen Koppelelement derart ausgestaltet, dass sich die beiden Kollisionselemente unabhängig voneinander bewegen können.

Dies bedeutet, dass eine Krafteinwirkung auf eines der Kollisionselemente nicht zwangsläufig zu einer Bewegung des anderen Kollisionselements führt. Jedes Kollisionselement kann sich eigenständig und/oder unabhängig bzw. separat vom jeweils anderen Kollisionselement und/oder relativ zum Waschportal bewegen, sodass eine Kollisionserkennung auch dann zuverlässig funktioniert, wenn eine Kollision nur an einem der Kollisionselemente oder in einem Bereich des Kollisionselementes, etwa an einem anderen Bauteil der Sicherheitsvorrichtung auftritt.

Trotz dieser unabhängigen Beweglichkeit bleibt das Koppelelement so mit den Kollisionselementen verbunden, dass eine Krafteinwirkung auf das Koppelelement selbst weiterhin an mindestens eines der Kollisionselemente weitergeleitet werden kann. Dadurch wird sichergestellt, dass eine Kollision mit dem Koppelelement ebenfalls detektiert wird. Dies ermöglicht eine flexible Kollisionserkennung, da sowohl lokale Kollisionen an den Kollisionselementen als auch eine Krafteinwirkung auf das Koppelelement erfasst werden, ohne die Bewegungsfreiheit der einzelnen Kollisionselemente einzuschränken.

Die Kopplungen des Koppelelementes mit den Kollisionselementen ist so gestaltet, dass eine Kraft auf das Koppelelement, ausgelöst durch eine Kollision, nicht dazu führen kann, dass ein Kollisionselement in seinen Bewegungen blockiert wird oder sich beispielsweise verklemmt.

Es können in einer Vorderansicht drei Bereiche vor dem Waschportal und/oder vor der Sicherheitsvorrichtung wie folgt definiert werden:
- Innenbereich: Dieser Bereich erstreckt sich von dem ersten Kollisionselement - dieses einschließend - in einer Vorderansicht gesehen nach innen in Richtung auf das Fahrzeug. Der Innenbereich ist Teil eines Raums, der sich einschließlich des ersten Kollisionselements nach innen bis zum Fahrzeug erstreckt.
- Zwischenbereich: Dieser Bereich befindet sich in der Vorderansicht gesehen zwischen dem ersten und dem zweiten Kollisionselement, diese jeweils ausschließend. Er beginnt direkt nach dem ersten Kollisionselement und endet direkt vor dem zweiten Kollisionselement, ohne diese jeweils einzuschließen.
- Außenbereich: Dieser Bereich erstreckt sich von dem zweiten Kollisionselement - dieses einschließend - in einer Vorderansicht gesehen nach außen (in Richtung der fahrzeugabgewandten Seite des Waschportals). Der Außenbereich ist Teil eines Raums, der sich einschließlich des zweiten Kollisionselements nach außen erstreckt.

Basierend auf diesen Bereichen können nun Kollisionsszenarien bzw. die Auswirkungen einer äußeren Krafteinwirkung eines Kollisionskörpers auf das erste bzw. zweite Kollisionselement sowie auf das Koppelelement beschrieben werden, die einzeln oder kumulativ auftreten können.

Wirkt ein Kollisionskörper mit einer Kraft im Innenbereich auf das erste Kollisionselement (mit vektorieller Kraftkomponente parallel und/oder senkrecht zu dem jeweiligen (hier: ersten) Schieberelement in Fahrtrichtung des Portals, in einer horizontalen Ebene verlaufend), so wird diese Kraft im Wesentlichen ausschließlich auf das erste Kollisionselement übertragen und durch die erste Detektoreinrichtung detektiert.

Wirkt ein Kollisionskörper mit einer Kraft im Innenbereich auf das Koppelelement (mit vektorieller Kraftkomponente parallel zu dem jeweiligen Schieberelement bzw. in Fahrtrichtung des Portals, in einer horizontalen Ebene verlaufend), so wird diese Kraft ausschließlich auf das erste Kollisionselement übertragen und durch die erste Detektoreinrichtung detektiert.

Wirkt eine Kraft innerhalb des Zwischenbereichs auf das Koppelelement, so wird diese Kraft anteilig auf das erste und/oder zweite Kollisionselement übertragen. Der Begriff "anteilig" bezieht sich auf die Position der Krafteinwirkung auf dem Koppelelement, anteilig zur Länge desselben. Die genaue Aufteilung der Kraftübertragung hängt vom Angriffspunkt der Kraft im Zwischenbereich ab. Befindet sich der Angriffspunkt näher am ersten Kollisionselement, so wird ein größerer Anteil der Kraft auf dieses übertragen, während der verbleibende Anteil auf das zweite Kollisionselement wirkt. Entsprechend gilt umgekehrt, dass bei einer Krafteinwirkung näher am zweiten Kollisionselement ein größerer Anteil der Kraftübertragung auf das zweite Kollisionselement erfolgt. Wirkt die Kraft genau mittig zwischen den beiden Kollisionselementen - bzw. in der Mitte des Koppelelements, falls dieses zu gleichen Anteilen über das erste und zweite Kollisionselement auskragt - so verteilt sich die Kraft gleichmäßig, d. h. jeweils zur Hälfte auf das erste und zweite Kollisionselement.

Die Bewegungen der Kollisionselemente, die aufgrund der Kollisionskräfte und deren Verteilung zwischen den Kollisionselementen hervorgerufen werden, ergeben sich aus den Rückstellkräften der jeweiligen Kollisionselemente, die nicht gleich seien müssen. Die Bewegung der Koppelstange wird von der ersten und/oder zweiten Detektoreinrichtung erkannt, in Abhängigkeit davon, ob sich die erste und/oder zweite Kollisionseinrichtung bewegt.

Wirkt ein Kollisionskörper mit einer Kraft im Außenbereich auf das Koppelelement in einem Umgebungsbereich des zweiten Kollisionselements (mit vektorieller Kraftkomponente parallel zu dem jeweiligen (hier: zweiten) Schieberelement, bzw. in Fahrtrichtung des Portals, in einer horizontalen Ebene verlaufend), so wird diese Kraft nahezu ausschließlich auf das zweite Kollisionselement übertragen und durch die zweite Detektoreinrichtung detektiert.

Wirkt ein Kollisionskörper mit einer Kraft im Außenbereich auf das zweite Kollisionselement (mit vektorieller Kraftkomponente parallel zu dem jeweiligen (hier: zweiten) Schieberelement, bzw. in Fahrtrichtung des Portals, in einer horizontalen Ebene verlaufend), so wird diese Kraft im Wesentlichen ausschließlich auf das zweite Kollisionselement übertragen und durch die zweite Detektoreinrichtung detektiert.

Wirkt ein Kollisionskörper mit einer Kraft im Außenbereich auf das Koppelelement (mit vektorieller Kraftkomponente parallel zu dem jeweiligen Schieberelement in Fahrtrichtung des Portals, in einer horizontalen Ebene verlaufend), so wird der Kraftanteil mit vektorieller Kraftkomponente parallel zu dem Schieberelement ausschließlich auf das zweite Kollisionselement übertragen und durch die zweite Detektoreinrichtung detektiert.

Wirkt ein Kollisionskörper mit einer Kraft im Außenbereich auf das Koppelelement (mit vektorieller Kraftkomponente senkrecht zu dem jeweiligen Schieberelement, bzw. quer zur Fahrtrichtung des Portals, in einer horizontalen Ebene verlaufend), so wird diese Kraftkomponente auf das erste Kollisionselement übertragen. In diesem Fall wird die Kraft weder von der ersten noch von der zweiten Detektoreinrichtung erfasst.

Wirkt ein Kollisionskörper mit einer Kraft innerhalb des Außenbereichs auf das zweite Kollisionselement (mit vektorieller Kraftkomponente senkrecht zu dem jeweiligen Schieberelement in Fahrtrichtung des Portals, in einer horizontalen Ebene verlaufend), so führt diese Kraft zu einer Auslenkung der zweiten Kollisionserkennungseinrichtung nach innen. Dieses Kollisionsszenario kann z.B. durch Festhalten einer Person an dem zweiten Kollisionselement (verbunden mit einem Drücken nach Innen bzw. einer Kraft senkrecht zur Fahrtrichtung des Portals) ausgelöst werden. In diesem Fall wird die Kraft von der zweiten Detektoreinrichtung erfasst.

Wirkt ein Kollisionskörper mit einer Kraft im Außenbereich auf das zweite Kollisionselement (mit vektorieller Kraftkomponente parallel und senkrecht zu dem jeweiligen Schieberelement, in einer horizontalen Ebene verlaufend), so wird die Kraftkomponente senkrecht zu dem Schieberelement auf das erste Kollisionselement übertragen. Die Kraftkomponente parallel zu dem Schieberelement wird von der zweiten Detektoreinrichtung detektiert. Dieses Kollisionsszenario kann z.B. durch Festhalten einer Person an dem zweiten Kollisionselement (verbunden mit einem schrägen Drücken nach Innen bzw. einer Kraft mit Kraftkomponenten parallel und senkrecht zur Fahrtrichtung des Portals) ausgelöst werden.

Wirkt ein Kollisionskörper mit einer Kraft im Außenbereich auf das Koppelelement, insbesondere auf das überstehende Teil des Koppelelements (mit vektorieller Kraftkomponente parallel und senkrecht zu dem jeweiligen Schieberelement, in einer horizontalen Ebene verlaufend), so wird die Kraftkomponente senkrecht zu dem Schieberelement auf das erste Kollisionselement übertragen. Die Kraftkomponente parallel zu dem Schieberelement wird auf das zweite Kollisionselement übertragen und von der zweiten Detektoreinrichtung detektiert.

Mithilfe der ersten und/oder zweiten Detektoreinrichtung und der voneinander unabhängigen Bewegungsmöglichkeiten der Kollisionselemente kann erkannt werden, ob eine Kollision in einem ersten Bereich, nämlich im Innenbereich oder im Zwischenbereich in direkter Umgebung des ersten Kollisionselements, oder in einem zweiten Bereich, nämlich im Außenbereich oder im Zwischenbereich in direkter Umgebung des zweiten Kollisionselements stattfindet. Im ersten Kollisionsfall (erster Bereich) wird im Wesentlichen nur der Sensor der ersten Detektoreinrichtung auslösen und im zweiten Kollisionsfall (zweiter Bereich) im Wesentlichen nur der Sensor der zweiten Detektoreinrichtung. Wenn beide Sensoren der ersten und zweiten Detektoreinrichtungen gleichzeitig auslösen, kann darauf geschlossen werden, dass die Kollision im Wesentlichen in einer Umgebung in der Mitte zwischen dem ersten und dem zweiten Kollisionselement stattfindet oder mehrere Kollisionskörper gleichzeitig kollidieren.

Die Sensorsignale (Auslösungen) können einer Verarbeitungseinheit zugeführt werden, um entsprechende Steuersignale insbesondere für das Waschportal auszulösen.

In einer möglichen Ausführungsform ist das mindestens eine Koppelelement drehbar mit dem ersten Kollisionselement gekoppelt, insbesondere im Wesentlichen horizontal drehbar. Insbesondere kann das mindestens eine Koppelelement drehbar um eine vertikale Achse sein. Drehbar bezieht sich vorzugsweise auf eine horizontale Ebene, beispielsweise um ein Kollisionselement oder ein Teil davon.

Alternativ oder zusätzlich kann das mindestens eine Koppelelement verschiebbar mit dem zweiten Kollisionselement gekoppelt sein, insbesondere im Wesentlichen horizontal verschiebbar und/oder drehbar. Diese verschiebbare Kopplung zwischen dem Koppelelement und dem zweiten Kollisionselement kann darüber hinaus auch ausdrücklich ein Verdrehen des Koppelelements an dem oder um das zweite(n) Kollisionselement ermöglichen.

Durch die drehbare Kopplung am ersten Kollisionselement wird nicht nur eine Bewegung des Kollisionselements in Richtung der Stütze des Waschportals ermöglicht, sondern auch eine seitliche Ausweichbewegung. Dies kann insbesondere vorteilhaft sein, wenn das Kollisionselement mit einem hervorstehenden Teil des Fahrzeugs, beispielsweise einem Außenspiegel, in Kontakt gerät. Die Drehbarkeit erlaubt es dem Kollisionselement, einer solchen seitlichen Krafteinwirkung nachzugeben und sich flexibel an den Kollisionskörper anzupassen, wodurch das Risiko einer Beschädigung reduziert wird.

Die verschiebbare Kopplung am zweiten Kollisionselement hingegen sorgt dafür, dass sich dieses Kollisionselement - aufgrund der Konstruktion der Führung des zugehörigen Schieberelementes (auch Schlitten) auf der Detektoreinrichtung - kaum oder gar nicht seitlich bewegt. Weiterhin verhindert die verschiebbare Kopplung, dass seitliche Bewegungen und seitliche Kräfte des Koppelelements auf das zweite Kollisionselement übertagen werden, so dass dies zu keiner ungewollten Auslenkung (unter Auslenkung wird im Folgenden eine rotatorische Auslenkung im Unterschied zu einer lateralen Verschiebung verstanden) des zweiten Kollisionselements führt. Dadurch wird eine präzise Erfassung der Kollision sichergestellt, während gleichzeitig eine unabhängige mechanische Kopplung zwischen den Elementen ermöglicht wird.

In einer ersten Ausführungsform der zweiten Detektoreinrichtung kann das zweite Schieberelement keine signifikante (rotatorische) Auslenkung durchführen ("Keine signifikante" Schwenkbewegung meint hier insbesondere eine Schwenkbewegung mit geringerer maximaler rotatorischer Auslenkung als die Schwenkbewegung des ersten Schieberelements). Insbesondere können in der ersten Ausführung zwei Lagerelemente zur Führung des zweiten Schieberelementes in der zweiten Führung (auch Führungseinrichtung) vorgesehen sein.

In einer zweiten Ausführungsform der zweiten Detektoreinrichtung kann das zweite Schieberelement jedoch - wie das erste Schieberelement der ersten Detektoreinrichtung - eine Auslenkung durchführen. In der zweiten Ausführungsform der zweiten Detektoreinrichtung, ist es dem zweiten Kollisionselement möglich sich neben der linearen Bewegung entgegen der Bewegungsrichtung des Portals (in einer horizontalen Ebene) seitlich zu bewegen. Diese Bewegung des zweiten Kollisionselements wird durch die verschieb- und drehbare Kopplung zum Koppelelement ausgeglichen, ohne dass dies eine Auswirkung auf das erste Kollisionselement hat. Insbesondere kann in der zweiten Ausführung nur ein Lagerelement zur Führung des zweiten Schieberelementes in der zweiten Führung (auch Führungseinrichtung) vorgesehen sein.

Die Kombination der ersten Ausführungsform der zweiten Detektoreinrichtung aus drehbarer Kopplung am ersten Kollisionselement und verschiebbarer Kopplung am zweiten Kollisionselement gewährleistet eine Anpassung an unterschiedliche Krafteinwirkungen.

Dadurch wird sichergestellt, dass sowohl eine zumindest teilweise unabhängige Bewegung der Kollisionselemente als auch eine zuverlässige Kollisionserkennung möglich ist, was bei der zweiten Ausführungsform der zweiten Detektoreinrichtung auch gegeben ist.

In einer möglichen Ausführungsform ist das mindestens eine Koppelelement auf einer Innenseite mit dem ersten Kollisionselement gekoppelt. Die Innenseite ist diejenige Seite der Sicherheitsvorrichtung, die dem zu reinigenden Objekt (Fahrzeug) zugewandt ist und an der die erste Kollisionserkennungseinrichtung vorgesehen ist.

An der Innenseite kann das Koppelelement weitgehend bündig mit dem ersten Kollisionselement abschließen. Dies bedeutet, dass das Koppelelement möglichst so an das erste Kollisionselement angebunden ist, dass es an der dem zu reinigenden Objekt zugewandten Seite keinen oder nur einen minimalen Überstand aufweist. Alternativ kann das Koppelelement einen Überstand aufweisen, der insbesondere an die seitliche Erstreckung von innenliegenden Waschaggregaten des Waschportals (etwa z.B. Felgenwäschern) angepasst ist.

Eine vollständig bündige Anbindung kann beispielsweise dadurch erreicht werden, dass das Koppelelement in eine entsprechende Aussparung oder Vertiefung im ersten Kollisionselement ganz oder so weit wie möglich integriert ist. Ist nur eine geringe Vertiefung vorhanden oder ist eine solche Einbettung beispielsweise aus Stabilitätsgründen nicht möglich, kann es zu einem geringen Überstand kommen. Dieser sollte möglichst klein gehalten werden und kann sich typischerweise im Bereich von wenigen Millimetern bewegen. Vorzugsweise liegt dieser Bereich zwischen 2mm und 5mm, weiter vorzugsweise zwischen 2mm und 3mm.

In einer möglichen Ausführungsform ist das mindestens eine Koppelelement auf einer Außenseite mit dem zweiten Kollisionselement gekoppelt. Die Außenseite ist diejenige Seite der Sicherheitsvorrichtung, die der Innenseite gegenüberliegt und an der die zweite Kollisionserkennungseinrichtung vorgesehen ist.

An dieser Außenseite kann das Koppelelement mit einem vorgegebenen Überstand über das zweite Kollisionselement und/oder über eine in der Vorderansicht gesehen seitliche Außenseite des Waschportals hinausragen. Dadurch kann der Überwachungsbereich in Richtung der Außenseite erweitert werden. Da sich auf dieser Seite kein zu reinigendes Fahrzeug befindet, müssen hier keine besonderen Rücksichten auf Fahrzeugkonturen genommen werden. Dies ermöglicht eine Konstruktion, bei der das Koppelelement gezielt weiter nach außen ragt, um auch dort auftretende Kollisionen zuverlässig zu detektieren, z.B. wenn sich eine Person außen neben dem Waschportal befindet.

Besonders vorteilhaft ist diese Anordnung für den Personenschutz. Da sich Personen potentiell in diesem Bereich aufhalten können, erweitert das herausragende Koppelelement den überwachten Raum und trägt dazu bei, Kollisionen umfassend und frühzeitig zu erkennen.

Darüber hinaus kann das Hinausragen des Koppelelements sicherstellen, dass auch seitlich über das Waschportal hinausragende Aggregate oder andere Komponenten in den Erfassungsbereich der Sicherheitsvorrichtung einbezogen werden. Beispiele für solche Komponenten sind Spritzschutzvorrichtungen, technische Gehäuse oder weitere Anbauten, die sich vor dem Waschportal befinden und über die eigentliche Begrenzung des Waschportals hinausragen. Indem das Koppelelement diese Bereiche abdeckt, kann eine vollständige Erfassung der potentiellen Kollisionsflächen gewährleistet werden.

Das Koppelelement kann asymmetrisch angeordnet sein und in unterschiedlichen Maße nach innen (über das erste Kollisionselement hinaus) und nach außen (über das zweite Kollisionselement hinaus) auskragen. Dies ermöglicht eine noch bessere Anpassung an Bauteile und/oder Waschaggregate der Waschanlage.

In einer möglichen Ausführungsform umfasst die Sicherheitsvorrichtung mindestens zwei Koppelelemente.

Die Verwendung mehrerer Koppelelemente ermöglicht es, den Überwachungsbereich gezielt zu erweitern. Bei vertikal verlaufenden Kollisionselementen sind die Koppelelemente vorzugsweise horizontal ausgerichtet, so dass sie auf unterschiedlichen Höhen angeordnet werden können. Dadurch können Kollisionen über die gesamte Breite des überwachten Bereichs in verschiedenen Höhen detektiert werden.

Die einzelnen Koppelelemente sind dabei vorzugsweise voneinander mechanisch entkoppelt, das heißt, es besteht keine feste oder starre Verbindung zwischen ihnen. Diese Entkopplung stellt sicher, dass jedes Koppelelement unabhängig auf eine Kollision reagieren kann, ohne dass zwingend eine Bewegung oder Kraftübertragung auf ein anderes Koppelelement erfolgt.

In einer einfachen Ausführung können beispielsweise zwei Koppelelemente vorgesehen sein, um Kollisionen in zwei unterschiedlichen Höhen zu erfassen. Je nach Anwendung und gewünschtem Überwachungsbereich sind jedoch auch mehr als zwei Koppelelemente möglich, um eine noch größere Fläche abzudecken. Beispielsweise orientiert sich die Höhe der Koppelelemente an der Höhe von stehenden erwachsenen Personen und an der Höhe von stehenden Kindern.

In einer möglichen Ausführungsform umfasst die erste Kollisionserkennungseinrichtung eine erste Aufhängeeinrichtung, die oberhalb des ersten Kollisionselements angeordnet ist. Diese Aufhängeeinrichtung ist dazu ausgelegt, das erste Kollisionselement zu halten, sodass es vertikal herabhängt und eine horizontale Pendelbewegung relativ zur ersten Aufhängeeinrichtung ausführen kann. Die Pendelbewegung kann insbesondere eine Pendelbewegung in annähernd einer horizontalen Ebene sein ("annähernd" meint hier, dass die vertikale Bewegung vernachlässigbar ist in Relation zur horizontalen Bewegung).

Alternativ oder ergänzend, kann die zweite Kollisionserkennungseinrichtung eine zweite Aufhängeeinrichtung in ähnlicher Weise umfassen, die oberhalb des zweiten Kollisionselements angeordnet ist. Auch diese ist so ausgelegt, dass das zweite Kollisionselement vertikal herabhängt und eine horizontale Pendelbewegung relativ zur zweiten Aufhängeeinrichtung ausführen kann. Die Pendelbewegung kann insbesondere eine Pendelbewegung in annähernd einer horizontalen Ebene sein ("annähernd" meint auch hier, dass die vertikale Bewegung vernachlässigbar ist in Relation zur horizontalen Bewegung).

Diese Aufhängeeinrichtungen ermöglichen es, dass die Kollisionselemente bei einer Krafteinwirkung nachgeben und ausweichen können. Eine mögliche Ausführungsform umfasst jeweils eine Stange, die an der jeweiligen Aufhängeeinrichtung beweglich befestigt ist, sodass sie frei nach unten pendeln kann.

Die Aufhängeeinrichtungen selbst sind mit einem festen Abstand von der Stütze des Waschportals nach vorne angeordnet. Dieser Abstand ist in der Regel festgelegt bzw. konstant und so bemessen, dass das Kollisionselement nach einer Kollision noch eine ausreichend große Pendelbewegung ausführen kann. Dadurch wird sichergestellt, dass das Waschportal nach der Kollisionserkennung rechtzeitig zum Stillstand gebracht wird, bevor eine maximale Auslenkung der Pendelbewegung erreicht ist.

In einer möglichen Ausführungsform ist das erste Schieberelement, starr mit dem ersten Kollisionselement verbunden und über eine Führung mit der ersten Detektoreinrichtung gekoppelt. Die Führung, in der das erste Schieberelement geführt ist, kann die Führungseinrichtung der ersten Detektoreinrichtung sein. Das Schieberelement ist so ausgelegt, dass es bei einer Krafteinwirkung auf das erste Kollisionselement, entgegen der Bewegungsrichtung des Waschportals eine lineare Bewegung entgegen der Bewegungsrichtung des Waschportals ausführt. Alternativ oder zusätzlich kann es dazu ausgebildet sein, bei einer seitlichen Krafteinwirkung mit einer - insbesondere horizontalen - vektoriellen Komponente senkrecht zur Bewegungsrichtung des Waschportals eine Schwenkbewegung auszuführen. Diese Schwenkbewegung erfolgt insbesondere in Richtung der Außenseite des Waschportals, also weg von dem zu reinigenden Objekt.

Die zweite Detektoreinrichtung ist mit einem zweiten Schieberelement gekoppelt, das starr mit dem zweiten Kollisionselement verbunden ist und, über eine Führung mit der zweiten Detektoreinrichtung gekoppelt. Die Führung, in der das zweite Schieberelement geführt ist, kann die Führungseinrichtung der zweiten Detektoreinrichtung, sein. Auch dieses Schieberelement ist dazu ausgelegt, bei einer Krafteinwirkung entgegen der Bewegungsrichtung des Waschportals eine lineare Bewegung entgegen dieser Bewegungsrichtung auszuführen.

Die zweite Kollisionserkennungseinrichtung, insbesondere die zweite Detektoreinrichtung kann in zwei unterschiedlichen Ausführungen ausgebildet sein. In einer ersten Ausführung der zweiten Kollisionserkennungseinrichtung wird das zweite Schieberelement in der zweiten Führungseinrichtung über zwei zweite Lagerelemente geführt und/oder gelagert. In einer zweiten Ausführung der zweiten Kollisionserkennungseinrichtung, insbesondere der zweiten Detektoreinrichtung wird das zweite Schieberelement in der zweiten Führungseinrichtung über nur ein zweites Lagerelement geführt und/oder gelagert.

In der ersten Ausführung der zweiten Kollisionserkennungseinrichtung (insbesondere der zweiten Detektoreinrichtung) mit zwei Lagerelementen, insbesondere Zapfen, führt das zweite Schieberelement bei einer seitlichen Krafteinwirkung keine signifikante Schwenk- (oder Dreh-) Bewegung aus. "Keine signifikante" Schwenkbewegung meint auch hier insbesondere eine Schwenkbewegung mit geringerer maximaler Auslenkung als die Schwenkbewegung des ersten Schieberelements.

In der zweiten Ausführung der zweiten Kollisionserkennungseinrichtung (insbesondere der zweiten Detektoreinrichtung) mit nur einem Lagerelement, insbesondere Zapfen, führt das zweite Schieberelement eine Schwenkbewegung bei einer seitlichen Krafteinwirkung in Richtung des zu reinigenden Fahrzeugs aus. In dieser Ausführung verhält sich die zweite Kollisionserkennungseinrichtung wie die erste Kollisionserkennungseinrichtung, nur um die dazwischen liegende Mittelebene gespiegelt. Sie kann in dieser zweiten Ausführung einen entsprechenden Aufbau aufweisen wie die erste Kollisionserkennungsreinrichtung.

Das Lagerelement der zweiten und/oder ersten Kollisionserkennungseinrichtung kann insbesondere als Zapfen ausgebildet sein.

Das Lagerelement der zweiten Kollisionserkennungseinrichtung kann ein-elementig (z.B. ein Zapfen) oder zwei-elementig (zwei Zapfen) ausgebildet sein. Der Durchmesser des zweiten Zapfens der zweiten Kollisionserkennungseinrichtung liegt in einem Bereich zwischen vorzugsweise 50% bis 95% des Durchmessers des ersten Zapfens. Der zweite Zapfen kann in der Seitenansicht in Bewegungsrichtung des Portals hinter dem ersten Zapfen angeordnet sein.

Das erste Schieberelement erlaubt sowohl eine lineare Bewegung nach hinten als auch eine seitliche Schwenkbewegung in Richtung der zweiten Kollisionserkennungseinrichtung. Dadurch kann das erste Kollisionselement einer seitlichen Krafteinwirkung nachgeben, beispielsweise wenn es mit einem hervorstehenden Fahrzeugteil wie einem Außenspiegel kollidiert. Die Aufhängung des zweiten Schieberelements ist in einer Ausführungsform hingegen konstruktiv so gestaltet, dass eine seitliche Bewegung nur in geringem Umfang möglich ist. Diese geringe seitliche Bewegung ist ausdrücklich vorgesehen, um eine seitliche Krafteinwirkung auf das zweite Kollisionselement in Richtung des zu reinigenden Fahrzeugs, detektieren zu können, ohne dass dies zu einer signifikanten Schwenkbewegung führt.

In einer möglichen Ausführungsform ist die maximale Strecke der linearen Bewegung des ersten und/oder zweiten Schieberelements bei einer Krafteinwirkung mit einer vektoriellen Komponente entgegen der Bewegungsrichtung des Waschportals größer als der Bremsweg des Waschportals.

Dies bedeutet, dass die Schieberelemente so gestaltet sind, dass sie während einer Kollision eine ausreichend große Bewegung der Kollisionselemente ermöglichen. Nach der Detektion einer Kollision wird der Anhaltevorgang des Waschportals eingeleitet, wobei das Portal aufgrund seiner Masse und Trägheit nicht sofort, sondern erst nach einer bestimmten Strecke (Nachlaufweg) vollständig zum Stillstand kommt. Damit während dieses Bremsvorgangs eine fortlaufende Bewegung der Kollisionselemente möglich bleibt, muss die verfügbare Strecke der Schieberelemente größer sein als der Bremsweg des Waschportals.

Durch diese Anordnung wird sichergestellt, dass das Kollisionselement während des Anhaltevorgangs (Bremsvorgangs) weiterhin ausweichen kann und eine Kollision zwischen dem Waschportal selbst, insbesondere den starren Stützen (Portalsäulen), und dem Kollisionskörper vermieden wird. Dies trägt entscheidend dazu bei, größere Beschädigungen am Kollisionskörper oder Verletzungen von Personen zu verhindern.

In einer möglichen Ausführungsform umfasst die erste Detektoreinrichtung eine erste Rückstelleinrichtung. Diese hält das erste Schieberelement mit einer vorgegebenen Kraft in einer Ausgangsposition, solange keine externe Kraft auf das Schieberelement einwirkt.

Entsprechend umfasst die zweite Detektoreinrichtung eine zweite Rückstelleinrichtung. Diese hält das zweite Schieberelement mit einer vorgegebenen Kraft in einer Ausgangsposition, bis eine externe Krafteinwirkung erfolgt.

Die Rückstelleinrichtungen sorgen dafür, dass die Schieberelemente und damit die gesamte Sicherheitsvorrichtung vor einer möglichen Kollision in einem definierten Zustand gehalten werden. Dadurch wird sichergestellt, dass die Kollisionselemente ihre vorgesehene Position einnehmen. Erst bei einer tatsächlichen Krafteinwirkung können sie ausweichen.

Die Kräfte der Rückstelleinrichtungen sollten so gewählt sein, dass sie mehrere wesentliche Anforderungen erfüllen. Einerseits müssen sie die Schieberelemente zuverlässig in der Ausgangsposition halten, solange das Waschportal in Betrieb ist. Andererseits dürfen sie nicht so hoch sein, dass sie eine Bewegung der Schieberelemente bei einer Kollision behindern und sie dürfen sich über den langen Nachlaufweg hinweg nicht signifikant erhöhen. Vielmehr sollte die Konstruktion so gestaltet sein, dass das Kollisionselement an der Stelle der Kollision leicht nachgeben kann. Dadurch werden Schäden oder Verletzungen vermieden.

Für die Rückstelleinrichtungen kommen verschiedene Mechanismen in Frage. Dazu gehören Federn oder Elastomere. Besonders vorteilhaft sind jedoch Gewichtssysteme in Kombination mit Seilzügen oder ähnlichen Mechanismen. Diese ermöglichen eine annähernd gleichmäßige Rückstellkraft über den gesamten Bewegungsweg des Schieberelements. Dadurch steigt die Krafteinwirkung auf das Schieberelement - und damit auf das Kollisionselement - während der Bewegung nicht weiter an. Dies sorgt für eine gleichmäßige und kontrollierte Reaktion auf eine Kollision.

In einer möglichen Ausführungsform ist das erste Schieberelement in einer ersten Führungseinrichtung (auch einfach Führung genannt) geführt und/oder über ein erstes Lagerelement gelagert. Diese Führungseinrichtung umfasst ein erstes Langloch oder eine vergleichbare erste Öffnung. Innerhalb dieser Führung ist das erste Schieberelement über ein erstes Lagerelement, insbesondere einen ersten Zapfen, gelagert. Dadurch kann das Schieberelement sowohl eine Längsbewegung entlang der Führungseinrichtung als auch eine Schwenkbewegung um das Lagerelement ausführen.

Die erste Führungseinrichtung dient dabei als definierte Bewegungsbahn für das Schieberelement. Innerhalb dieser Öffnung befindet sich das Lagerelement, vorzugsweise in Form eines Zapfens, das die Bewegung des Schieberelements führt. Aufgrund dieser Anordnung kann sich das Schieberelement innerhalb der ersten Führungseinrichtung linear verschieben, während gleichzeitig eine Drehbewegung um das Lagerelement möglich bleibt.

Das jeweilige Lagerelement ist so gestaltet, dass es innerhalb der Führungseinrichtung, insbesondere in dem definierten Zustand des Kollisionselements, der Nullposition (Position ohne externe Krafteinwirkung auf die Sicherheitsvorrichtung), nur ein geringes Spiel aufweist. Die Toleranz ist dabei so gewählt, dass ein Verklemmen oder Verkanten des Schieberelements vermieden wird. Das Spiel der Führungseinrichtung ist größer, wenn sich das Kollisionselement nicht mehr in der Nullposition befindet, um ein Verklemmen des Schieberelements in der Führungseinrichtung zu verhindern.

Diese Konstruktion stellt sicher, dass das erste Schieberelement sowohl eine kontrollierte lineare Bewegung ausführen kann als auch bei einer seitlichen Krafteinwirkung eine Schwenkbewegung zulässt.

In einer möglichen (ersten) Ausführungsform ist das zweite Schieberelement in einer zweiten Führungseinrichtung (auch einfach als Führung bezeichnet) geführt und/oder durch zumindest ein zweites Lagerelement gelagert. Diese Führungseinrichtung umfasst ein zweites Langloch oder eine vergleichbare zweite Öffnung. Das zweite Schieberelement kann dabei über ein oder zwei zweite Lagerelemente, insbesondere ein oder zwei zweite Zapfen, in der zweiten Führungseinrichtung gelagert sein. Mit anderen Worten kann das zumindest eine zweite Lagerelement der zweiten Detektoreinrichtung einen oder zwei Zapfen aufweisen. Die Zapfen können, wie nachstehend erläutert, unterschiedlichen Durchmesser aufweisen.

Durch die Anordnung von zwei Zapfen wird die Schwenkbewegung des zweiten Schieberelements stark eingeschränkt und im Wesentlichen verhindert. Die beiden Zapfen sind dabei versetzt innerhalb der Führungseinrichtung angeordnet. Diese Konstruktion der zweiten Detektoreinrichtung in seiner ersten Ausführungsform mit zwei Lagerelementen stellt sicher, dass das zweite Schieberelement sich vorwiegend mit einer linearen Bewegung entlang der Führungseinrichtung verschieben kann. "Vorwiegend" meint hier, dass die Hauptbewegung linear ist, aber auch ein geringe Schwenkbewegung möglich ist, insbesondere um den ersten Zapfen.

Die zweite Führungseinrichtung sollte dabei ausreichend groß ausgeführt sein, um den erforderlichen Verfahrweg des zweiten Schieberelements zu ermöglichen. Dies gilt insbesondere unter Berücksichtigung der Tatsache, dass beide Zapfen innerhalb der Führung bewegt werden müssen.

Der Ausdruck "im Wesentlichen" bezieht sich darauf, dass eine seitliche Bewegung des zweiten Schieberelements zwar stark eingeschränkt ist, jedoch nicht vollständig ausgeschlossen wird. Die verbleibende seitliche Bewegung ergibt sich aus dem Spiel zwischen den Zapfen und der Breite des Langlochs in der Führungseinrichtung. Diese Bewegung ist beabsichtigt und dient dazu, bei einer seitlichen Krafteinwirkung eine minimale seitliche Verschiebung zu ermöglichen, um diese Krafteinwirkung zu detektieren.

Typischerweise liegt die seitliche Beweglichkeit im Bereich von 1 mm, 2 mm oder bis zu 5 mm.

In einer möglichen Ausführungsform weist mindestens einer der beiden Zapfen einen reduzierten Durchmesser im Vergleich zur zweiten Führungseinrichtung auf. Dies ermöglicht eine begrenzte seitliche Relativbewegung des zweiten Schieberelements innerhalb der Führungseinrichtung.

Bevorzugt handelt es sich bei dem dünneren Zapfen um den in Bewegungsrichtung aus der Ruhelage heraus gesehen vorderen Zapfen, bzw. den in Bewegungsrichtung des Waschportals gesehen hinteren Zapfen. In anderen Worten handelt es sich dabei bevorzugt um den Zapfen, der vom zweiten Kollisionselement weiter entfernt ist, und der im Weiteren als erster Zapfen bezeichnet wird. Während dieser erste Zapfen ein gewisses zusätzliches Spiel innerhalb der Führungseinrichtung aufweist, sollte der zweite Zapfen so geführt sein, dass eine stabile Positionierung des zweiten Schieberelements in dessen Nullposition gewährleistet ist. Dieses Spiel wird größer, wenn sich das zweite Kollisionselement aus dessen Nullposition herausbewegt.

Dabei ist auch für diesen zweiten Zapfen eine gewisse Toleranz vorgesehen. Diese sollte so bemessen sein, dass eine reibungsfreie Bewegung entlang der vorgesehenen Bahn ermöglicht wird, ohne dass es zu einem Verkanten oder Verklemmen kommt. Der erste Zapfen mit dem reduzierten Durchmesser erlaubt eine begrenzte seitliche Bewegung des Schieberelements. Diese Bewegung ist so gewählt, dass sie eine seitliche Krafteinwirkung auf das zweite Kollisionselement in Richtung des zu reinigenden Fahrzeugs detektierbar macht, ohne eine unkontrollierte Schwenkbewegung zuzulassen.

Das zweite Langloch weist dabei vorzugsweise eine Form auf, welche auf einer Längsseite im Wesentlichen geradlinig verläuft und auf der gegenüberliegenden Längsseite eine Verjüngung der Spaltbreite bewirkt. Die Verjüngung der Spaltbreite ist vorzugsweise in der unmittelbaren Umgebung des zweiten Zapfens ausgebildet.

Durch die bereits erwähnte Rückstelleinrichtung wird das zweite Schieberelement in seiner Ruhelage gehalten, auch wenn einer der Zapfen ein größeres Spiel innerhalb der Führung besitzt. Eine Bewegung aus dieser Ruhelage erfolgt erst, wenn eine entsprechende Krafteinwirkung auf das Schieberelement auftritt, wodurch eine zuverlässige Kollisionserkennung gewährleistet wird.

In einer möglichen Ausführungsform kann der erste Zapfen relativ zu der Spaltbreite des zweiten Langlochs sehr klein werden.

Alternativ ist es in einer (zweiten) Ausführung möglich, dass das zweite Schieberelement nur über ein zweites Lagerelement, insbesondere einen zweiten Zapfen, in der zweiten Führungseinrichtung geführt und/oder gelagert ist, so dass also insbesondere einer der beiden Lagerelemente, insbesondere der erste Zapfen, gänzlich weggelassen wird. In der zweiten Ausführung der zweiten Kollisionserkennungseinrichtung, entspricht die Lagerung für das zweite Schieberelement in der zweiten Führungseinrichtung der Lagerung für das erste Schieberelement in der ersten Führungseinrichtung, und ist quasi nur um die dazwischen liegende Mittelebene gespiegelt. In anderen Worten steht die zweite Führungseinrichtung der zweiten Detektoreinrichtung in dieser Ausführung mit nur einem Lagerelement, insbesondere einem Zapfen in Wirkverbindung. Das zweite Schieberelement kann folglich sowohl eine laterale Verschiebung als auch eine Verdrehung nach innen (in Richtung des zu waschenden Fahrzeugs) ausführen.

In einer möglichen Ausführungsform weist das erste Kollisionselement eine konturierte Form auf, die zumindest teilweise den maximalen Behandlungsraum für das zu reinigende Objekt widerspiegelt. Insbesondere kann das Kollisionselement in Bereichen mit seitlichen Aggregaten oder anderen Komponenten der Portalwaschanlage eine angepasste Geometrie aufweisen.

Während grundsätzlich eine einfache, geradlinige Stange als Kollisionselement denkbar ist, kann sich aufgrund der komplexeren Fahrzeuggeometrie und der verschiedenen Maschinenelemente der Waschanlage eine angepasste Formgebung als vorteilhaft erweisen. Dies betrifft beispielsweise herausragende Fahrzeugteile wie Außenspiegel, aber auch spezielle Waschaggregate der Portalwaschanlage, die weiter in den Reinigungsbereich hineinragen.

Durch eine gezielte Formgebung des ersten Kollisionselements kann sichergestellt werden, dass es sich an die tatsächlichen Gegebenheiten anpasst. Beispielsweise kann das Kollisionselement im Bereich eines Radwäschers weiter in den Reinigungsbereich hineinragen, um eine effektive Überwachung dieses Bereichs zu gewährleisten.

Diese Anpassung stellt sicher, dass die Sicherheitsvorrichtung den maximalen Behandlungsraum für das Fahrzeug optimal erfasst und gleichzeitig eine zuverlässige Kollisionserkennung gewährleistet.

In einer möglichen Ausführungsform weist das mindestens eine Koppelelement in Richtung der Außenseite eine seitliche Erstreckung auf. Diese Erstreckung geht in einer Draufsicht gesehen seitlich über die vertikale Projektion einer Stütze des Waschportals hinaus. Dadurch können insbesondere seitlich herausragende Aggregate oder andere Komponenten des Waschportals abgedeckt werden.

Während das zweite Kollisionselement typischerweise die äußere Kante der Portalsäule des Waschportals überwacht, können sich darüber hinaus weitere Komponenten oder Aggregate befinden, die über diese Begrenzung hinaus in Richtung der Außenseite hinausragen. Ein Beispiel hierfür ist ein Spritzschutz für eine Waschbürste, der über die eigentliche Stütze des Portals hinausragt.

Durch die Verwendung von seitlich herausragenden Koppelelementen, insbesondere wenn diese mindestens annähernd horizontal verlaufen, kann der Überwachungsbereich gezielt in Fahrtrichtung abgeschirmt werden. Diese Koppelelemente erstrecken sich so weit in den Außenbereich, dass auch hervorstehende Komponenten oder Aggregate des Waschportals erfasst werden.

Dies stellt sicher, dass eine mögliche Kollision dieser herausragenden Komponenten vorauseilend erkannt und verhindert werden kann und ein aktives Umlaufen der Koppelstangen im Außenbereich durch eine Person verhindert wird. Auf diese Weise wird nicht nur das Waschportal selbst geschützt, sondern auch die Sicherheit im Umfeld der Portalwaschanlage verbessert.

In einer möglichen Ausführungsform umfasst die erste Kollisionserkennungseinrichtung ein erstes Sensorelement, das dazu ausgelegt ist, eine Bewegung des ersten Kollisionselements zu detektieren. Entsprechend umfasst die zweite Kollisionserkennungseinrichtung ein zweites Sensorelement, das eine Bewegung des zweiten Kollisionselements erfassen kann.

Die Sensorelemente können mehrere Bauteile umfassen und/oder sind als Sensoren zu verstehen, die ein Sensorsignal ausgeben, sobald ein Kollisionsereignis zwischen der Sicherheitseinrichtung und einem Kollisionskörper eintritt. Da eine Kollision eine Bewegung innerhalb der ersten und/oder zweiten Kollisionserkennungseinrichtung der Sicherheitseinrichtung verursacht, können diese Bewegungen durch die Sensorelemente zuverlässig detektiert werden. Bei den Bewegungen kann es sich um laterale Bewegungen und Rotationsbewegungen handeln. Die Sensorelemente können insbesondere einen Sensorsignalgeber und einen Sensorsignalempfänger umfassen, die an relativ zueinander beweglichen Bauteilen der jeweiligen Kollisionserkennungseinrichtung angeordnet sind, insbesondere um die Bewegung (Lateralverschiebung oder Rotation) des Schieberelementes (auch als Schieber bezeichnet) zu detektieren. Der Sensorsignalgeber kann vorzugsweise auf einem beweglichen Bauteil Kollisionserkennungseinrichtung angeordnet sein (wie z.B. dem Schieberelement). Der Sensorsignalempfänger kann vorzugsweise auf einer nicht zur Kollisionserkennungseinrichtung gehörenden Einheit positioniert sein, wie z.B. einer Seitenfläche des Waschportals in unmittelbarer Nähe des Schieberelements).

Besonders vorteilhaft ist die Anordnung der Sensorelemente an oder innerhalb der jeweiligen Detektoreinrichtungen. So können beispielsweise Bewegungen der Schieberelemente direkt erfasst werden, da diese durch eine Krafteinwirkung auf das jeweilige Kollisionselement ausgelöst werden.

Grundsätzlich können verschiedene Sensortypen eingesetzt werden, sofern sie in der Lage sind, eine Veränderung aus der Ruhelage heraus zu detektieren. Während optische Systeme wie Gabellichtschranken grundsätzlich geeignet wären, kann deren Einsatz im rauhen Umfeld einer Fahrzeugwaschanlage aufgrund von Verschmutzung und Feuchtigkeit problematisch sein. Daher sind vorzugsweise elektrische Systeme, insbesondere induktive Sensoren oder vergleichbare Sensoren, von Vorteil. Diese ermöglichen eine zuverlässige Erfassung der Bewegung unter den anspruchsvollen Bedingungen einer Fahrzeugwaschanlage.

In einer möglichen Ausführungsform interagiert die Sicherheitsvorrichtung mit einer Steuereinrichtung, die dazu ausgebildet ist, die Bewegung des Waschportals zu stoppen, falls zumindest ein Sensorsignal erfasst wird, beispielsweise bei einer Bewegungsdetektion des ersten Kollisionselements oder des zweiten Kollisionselements. Ein Stopp der Waschportalbewegung wird seitens der Steuereinrichtung auch dann ausgelöst, wenn beide Detektoreinrichtungen, insbesondere beide Sensoren, ein Signal auslösen, z.B. wenn eine Bewegung des ersten Kollisionselements und des zweiten Kollisionselements detektiert wird.

Der Datenaustausch zwischen der Sicherheitsvorrichtung und der Steuereinrichtung erfolgt über entsprechende Netzwerke (z.B. Bussystem) oder Datenverbindungen (drahtgebunden oder drahtlos, wie z.B. Funkverbindungen). Die Steuereinrichtung kann als Bauteil auch in die Sicherheitsvorrichtung integriert sein. In diesem Fall handelt es sich um interne Schnittstellen.

Diese Steuereinrichtung sorgt dafür, dass nach der Erkennung einer Kollision mit dem Sicherheitssystem ein Prozess eingeleitet wird, der das Waschportal möglichst rasch stoppt, um eine Kollision des Waschportals mit dem Kollisionskörper und damit Schäden oder Verletzungen zu vermeiden.

Die Steuereinrichtung kann in eine übergeordnete Steuerungseinheit integriert sein, die den gesamten Waschprozess oder den Betrieb des Waschportals verwaltet. Alternativ kann sie auch als separate, dezidierte Steuereinheit ausgeführt sein, die unabhängig von der Hauptsteuerung arbeitet und speziell für Sicherheitsaspekte verantwortlich ist. Letzteres hat den Vorteil, dass selbst im Falle einer Fehlfunktion der Hauptsteuerung die Sicherheitsvorrichtung weiterhin ein sicheres Abschalten des Waschportals gewährleisten kann.

Das Steuerungskonzept kann auf verschiedene Weise implementiert sein. Eine Möglichkeit ist die softwarebasierte Umsetzung, bei der die Steuerungslogik als Programmcode ausgeführt wird. Dieser Programmcode kann in einem Speicher abgelegt sein und von einem Mikrocontroller oder einer vergleichbaren Recheneinheit verarbeitet werden.

Alternativ sind auch hardwarebasierte Lösungen möglich, etwa in Form von elektrischen oder elektronischen Schaltungen. Diese können auf diskreten elektronischen Bauelementen basieren, die eine direkte Abschaltung des Waschportals im Kollisionsfall bewirken.

In einer möglichen Ausführungsform umfasst das Waschportal mindestens ein Schutzelement zwischen den zwei Kollisionselementen und/oder den Koppelelementen. Insbesondere kann das Schutzelement in einem Zwischenbereich zwischen den Koppelelementen und zwischen den beiden Kollisionselementen angeordnet sein. Das Schutzelement dient zum Schutz von in Bewegungsrichtung gesehen weiter hinten angeordneten Komponenten des Waschportals. Dieses Schutzelement kann als Stangenkonstruktion und/oder als flächige Konstruktion, z.B. als flexible Platte oder Gewebe (textil, Tuch oder flexibles Material) ausgeführt sein und erstreckt sich zumindest teilweise zwischen diesen Komponenten.

Das Schutzelement dient dazu, eine mechanische Barriere zwischen der Sicherheitsvorrichtung und weiter hinten liegenden Komponenten oder Anbauteilen des Waschportals zu schaffen. Dadurch wird verhindert, dass während des Betriebs Objekte oder Personen unbeabsichtigt in diesen Zwischenraum geraten.

In einer möglichen Ausführungsform kann das Schutzelement als durchgehende oder segmentierte Stange ausgeführt sein, die sich über den relevanten Bereich erstreckt. Alternativ oder kumulativ sind Platten oder flexible Planen oder Gitterstrukturen möglich, die eine noch größere Abdeckung bieten. Die Wahl des konkreten Schutzelements kann abhängig von den baulichen Gegebenheiten des Waschportals und den erforderlichen Sicherheitsanforderungen variieren.

Durch diese Maßnahme wird sichergestellt, dass keine ungeschützten Zwischenräume zwischen der Sicherheitsvorrichtung und den nachfolgenden Komponenten des Waschportals entstehen, wodurch die Sicherheit für Personen und Objekte im Umfeld der Portalwaschanlage weiter erhöht wird.

Die vorliegende Erfindung betrifft somit eine Sicherheitsvorrichtung für eine Portalwaschanlage, die dazu ausgelegt ist, Kollisionen der Sicherheitsvorrichtung mit Objekten, Kollisionskörpern oder Personen frühzeitig zu erkennen, um Kollisionen des Kollisionskörpers mit dem Waschportal zu vermeiden und die Bewegung des Waschportals im Kollisionsfall zu stoppen. Hierzu umfasst die Sicherheitsvorrichtung eine erste und eine zweite Kollisionserkennungseinrichtung, die jeweils ein Kollisionselement sowie eine zugehörige Detektoreinrichtung beinhalten.

Ein zentrales Merkmal der Erfindung ist die Verwendung von mindestens einem Koppelelement, das die beiden Kollisionselemente mechanisch miteinander verbindet und dadurch den Erfassungsbereich für eine Kollision erweitert. Das zumindest eine Koppelelement, insbesondere zwei, sind dabei so ausgeführt, dass sie eine unabhängige Bewegung der Kollisionselemente ermöglichen, sodass diese weiterhin auf lokale Krafteinwirkungen reagieren können. Gleichzeitig sorgen die Koppelelemente dafür, dass eine Kollision mit einem Koppelelement eine Kraftübertragung auf mindestens eines der Kollisionselemente und die zugehörige Detektoreinrichtung bewirkt, wodurch eine zuverlässige Erfassung des Kollisionsereignisses sichergestellt wird.

Zur weiteren Optimierung der Sicherheitsvorrichtung können angepasste Kollisionselemente, herausragende Koppelelemente und/oder Schutzelemente vorgesehen sein, um verschiedene Bereiche der Portalwaschanlage abzudecken. Eine Steuereinrichtung stellt sicher, dass nach der vorauseilenden Detektion einer Kollision das Waschportal schnellstmöglich gestoppt wird. Durch diese Konstruktion wird eine effektive und zuverlässige Verhinderung von Kollisionen mit der Portalwaschanlage erreicht, wodurch die Sicherheit in der Portalwaschanlage deutlich erhöht wird.

Im Rahmen dieser Erfindung gibt es Bauteile oder Elemente die in einer ersten oder zweiten Instanz vorkommen (z.B. erstes Kollisionselement/Detektoreinrichtung/Schieberelement... und zweites Kollisionselement/Detektoreinrichtung/ Schieberelement ...). Wenn das jeweilige Bauteil ohne das Adjektiv "erstes" oder "zweites" erwähnt oder beschrieben wird, soll die Aussage für beide Instanzen gelten.

### Kurze Beschreibung der Figuren

Zur weiteren Veranschaulichung der Erfindung werden im Folgenden anhand von Ausführungsbeispielen verschiedene Merkmale und Funktionsweisen der Sicherheitsvorrichtung näher erläutert. Dabei wird auf die beigefügten Figuren Bezug genommen, die beispielhafte Darstellungen der Erfindung zeigen. Die Figuren dienen dazu, das Erfindungskonzept zu illustrieren und verdeutlichen mögliche konstruktive Umsetzungen der beschriebenen Sicherheitsvorrichtung für eine Portalwaschanlage.

Es zeigen:
Figur 1 zeigt eine schematische Draufsicht auf eine Portalwaschanlage mit einem beweglichen Waschportal.
Figur 2a zeigt eine schematische Darstellung in einer Vorderansicht eines Teils des Waschportals mit einer Sicherheitsvorrichtung gemäß einer Ausführungsform.
Figur 2b zeigt eine schematische Darstellung des in Fig. 2a gezeigten Waschportals in einer Seitenansicht mit einer Sicherheitsvorrichtung gemäß einer Ausführungsform.
Figur 3a zeigt eine schematische Darstellung der ersten Kollisionserkennungseinrichtung mit einer ersten Detektoreinrichtung in Draufsicht.
Figur 3b zeigt eine schematische Darstellung der ersten Detektoreinrichtung mit dem ersten Lagerelement in Draufsicht.
Figur 3c zeigt eine schematische Seitenansicht der ersten Detektoreinrichtung und der ersten Rückstelleinrichtung, die in Verbindung mit dem ersten Schieberelement und dem ersten Kollisionselement steht.
Figur 4a zeigt eine schematische Darstellung der zweiten Kollisionserkennungseinrichtung mit einer zweiten Detektoreinrichtung mit zwei zweiten Lagerelementen in Draufsicht.
Figur 4b zeigt eine detaillierte Darstellung der zweiten Detektoreinrichtung in Draufsicht.
Figur 4c zeigt eine schematische Seitenansicht der zweiten Detektoreinrichtung und der zweiten Rückstelleinrichtung die in Verbindung mit dem zweiten Schieberelement und dem zweiten Kollisionselement steht.
Figur 5 zeigt eine schematische Darstellung eines Koppelelements gemäß einer Ausführungsform.
Figur 6 zeigt eine schematische Darstellung eines Kollisionsszenarios bei einer frontalen Kollision mit dem ersten Kollisionselement.
Figur 7 zeigt eine schematische Darstellung eines Kollisionsszenarios bei einer seitlichen Kollision mit dem ersten Kollisionselement.
Figur 8a zeigt eine schematische Darstellung eines Kollisionsszenarios bei einer seitlichen Kollision mit dem zweiten Kollisionselement nach einer ersten Ausführungsform.
Figur 8b zeigt eine schematische Darstellung eines Kollisionsszenarios bei einer seitlichen Kollision mit dem zweiten Kollisionselement nach einer zweiten Ausführungsform.
Figur 8c zeigt eine schematische Darstellung eines Kollisionsszenarios bei einer seitlichen Kollision mit dem zweiten Kollisionselement nach einer zweiten Ausführungsform.
Figur 9 zeigt eine schematische Darstellung eines Kollisionsszenarios bei einer Kollision mit einem Koppelelement in einem mittleren Bereich zwischen den Kollisionselementen.
Figur 10 zeigt eine schematische Darstellung eines Kollisionsszenarios bei einer Kollision mit einem Koppelelement in der Nähe des ersten Kollisionselements.
Figur 11a zeigt eine schematische Darstellung eines Kollisionsszenarios bei einer Kollision mit einem Koppelelement im Zwischenbereich in der Nähe des zweiten Kollisionselements.
Figur 11b zeigt eine schematische Darstellung eines Kollisionsszenarios bei einer Kollision mit einem Koppelelement im Außenbereich in der Nähe des zweiten Kollisionselements.
Figur 12a zeigt eine schematische Darstellung eines Kollisionsszenarios bei einer Kollision mit einer seitlichen Krafteinwirkung mit einem Koppelelement zwischen dem zweiten Kollisionselement und dem äußeren Ende.
Figur 12b zeigt eine schematische Darstellung eines Kollisionsszenarios bei einer Kollision mit einer seitlichen Krafteinwirkung mit einem Koppelelement zwischen dem zweiten Kollisionselement und dem äußeren Ende.
Figur 13 zeigt eine schematische Draufsicht auf eine Säule des Waschportals mit der Sicherheitsvorrichtung gemäß einer Ausführungsform.
Figur 14 zeigt ein Blockschaltbild einer Steuereinrichtung zur Ansteuerung des Waschportals basierend auf Signalen der Kollisionserkennungseinrichtungen.

Nachfolgend werden verschiedene Ausführungsformen der Erfindung anhand der dargestellten Figuren näher erläutert. Die in den Figuren gezeigten Beispiele dienen der Veranschaulichung und sind nicht als einschränkend zu verstehen. Einzelne Merkmale der beschriebenen Ausführungsformen können miteinander kombiniert oder in abgewandelter Form realisiert werden, sofern dies technisch möglich ist und keine widersprüchlichen Anforderungen bestehen. In den Figuren werden gleiche oder gleichartige Elemente mit denselben Bezugszeichen versehen.

### Beschreibung von Ausführungsformen

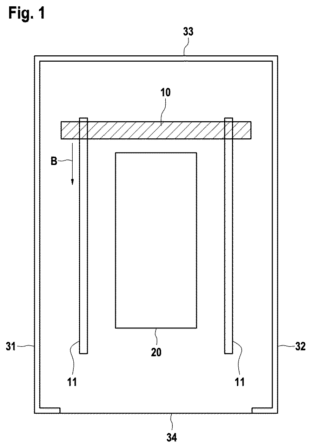

**Figur** 1 zeigt eine schematische Darstellung einer Draufsicht auf eine Portalwaschanlage gemäß einer Ausführungsform. Diese Portalwaschanlage kann sich beispielsweise in einem Raum oder einer Halle befinden, die durch zwei Seitenwände 31 und 32, eine Stirnseite 33 sowie eine Einfahrt mit einer Öffnung 34 begrenzt wird. Die Öffnung 34 kann beispielsweise als Tor oder vergleichbare Zugangseinrichtung ausgeführt sein und ermöglicht es, dass ein Fahrzeug 20 in den Arbeitsraum einfährt und an einer vordefinierten Position abgestellt wird.

Nach dem Einfahren sollte der Fahrer das Fahrzeug 20 sowie den Arbeitsraum verlassen und den Waschvorgang von außen starten.

Während des Waschvorgangs kann sich das Waschportal 10 entlang von Führungsschienen 11 bewegen, beispielsweise in Bewegungsrichtung B. Dabei können verschiedene Wasch- und Reinigungsprozesse durchgeführt werden. So kann das Fahrzeug 20 mit Waschflüssigkeiten benetzt oder durch Bürsten oder andere Reinigungsgeräte behandelt werden.

Zusätzlich können spezielle Waschbürsten z.B. für die Radreinigung (z.B. Felgenwäscher) vorgesehen sein, die an den Positionen der Räder gezielt in Richtung des Fahrzeugs 20 ausfahrbar sind, um die Reinigungswirkung zu verbessern. Ebenso können weitere Aggregate, wie Gebläse oder andere Trocknungseinrichtungen vorhanden sein, um das Fahrzeug 20 nach der Reinigung zu trocknen.

Die genannten Vorgänge zur Reinigung des Fahrzeugs 20 sind beispielhaft und nicht einschränkend zu verstehen. Je nach Ausgestaltung der Portalwaschanlage können weitere oder alternative Wasch- und Pflegeprozesse vorgesehen sein.

Für die Bewegung des Waschportals 10 sind vergleichsweise große Kräfte erforderlich. Dies ergibt sich zum einen aus der hohen Masse des Waschportals 10, die beschleunigt und abgebremst werden muss. Zum anderen entsteht während des Betriebs ein signifikanter Widerstand, beispielsweise durch die Reibung der Waschbürsten an der Oberfläche des Fahrzeugs 20 sowie durch weitere mechanische Belastungen der Reinigungsaggregate. Um diesen Widerständen entgegenzuwirken, sind leistungsstarke Antriebe erforderlich, die eine kontrollierte Bewegung des Waschportals 10 ermöglichen.

Aufgrund dieser hohen Masse und der erforderlichen Antriebskräfte besteht jedoch ein erhebliches Risiko bei einer Kollision des Waschportals 10 mit einem Kollisionskörper oder Hindernis. Eine solche Kollision kann zu erheblichen Beschädigungen an Objekten führen. Noch kritischer ist das Risiko für Personen, die sich während des Waschvorgangs im Arbeitsraum aufhalten könnten, da eine Kollision mit dem Waschportal 10 erhebliche Verletzungen zur Folge haben kann.

Neben der Kollision mit Fahrzeugteilen oder anderen Objekten besteht auch die Gefahr, dass sich beim Starten des Waschvorgangs unerwünschte Gegenstände im Arbeitsbereich des Waschportals 10 befinden. Ebenso kann es vorkommen, dass sich noch eine Person im Arbeitsraum befindet, wenn der Waschvorgang eingeleitet wird. In einigen Fällen kann es auch geschehen, dass eine Person nach dem Starten des Waschvorgangs den Arbeitsraum betritt. Dies könnte beispielsweise der Fall sein, wenn der Benutzer nochmals zu seinem Fahrzeug 20 zurückkehrt, um ein noch offenes Fenster zu schließen oder nachträglich Gegenstände aus dem Fahrzeug zu entnehmen.

Daher ist es entscheidend, dass Kollisionen mit dem Waschportal 10 vermieden und entsprechende Kollisionssituationen frühzeitig erkannt werden, sodass die Bewegung des Waschportals 10 im Kollisionsfall schnellstmöglich gestoppt werden kann.

Nachfolgend wird ein Konzept für eine mögliche Sicherheitsvorrichtung beschrieben, die dazu ausgelegt ist, eine Kollisionsgefahr zu detektieren, insbesondere mögliche Kollisionen vorauseilend und damit möglichst frühzeitig zu erkennen. Durch diese frühzeitige Erkennung kann die Bewegung des Waschportals 10 schnellstmöglich gestoppt werden, sobald eine Kollision der Sicherheitsvorrichtung mit einem Kollisionskörper (Objekt oder einer Person) detektiert wird um eine Kollision des Waschportals mit dem Kollisionskörper zu vermeiden.

Die beschriebene Sicherheitsvorrichtung ermöglicht nicht nur die Vermeidung von Kollisionen mit dem Fahrzeug 20, insbesondere mit hervorstehenden Anbauteilen wie einem Seitenspiegel, sondern ist insbesondere dazu ausgelegt, weitere Kollisionskörper (z.B. Personen) zu detektieren. Dies umfasst insbesondere Objekte oder Personen, die sich außerhalb des direkten Waschbereichs des Fahrzeugs 20 befinden, sich jedoch im Einflussbereich des beweglichen Waschportals 10 aufhalten.

Ein solcher kritischer Bereich kann sich beispielsweise direkt vor den Waschportalsäulen (auch: Stützen des Waschportals 10) befinden, wo sich eine Person aufhalten oder ein Gegenstand abgelegt sein könnte. Ebenso können sich nach außen hinausragende Teile des Waschportals 10 im Kollisionsbereich befinden, etwa bei überstehenden Komponenten oder Aggregaten. Durch die geeignete Gestaltung der Sicherheitsvorrichtung kann auch dieser erweiterte Bereich zuverlässig überwacht werden, um potentielle Gefahren frühzeitig zu erkennen.

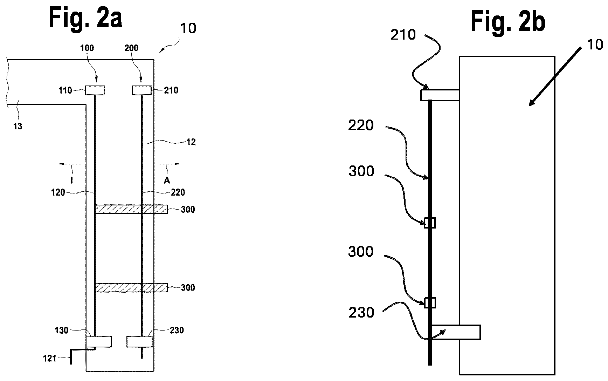

Figur 2a zeigt einen Teil eines Waschportals 10 in Vorderansicht. Dargestellt ist ein Abschnitt eines Querträgers 13, an dem verschiedene Reinigungskomponenten vorgesehen sein können. Dazu gehört beispielsweise eine Dachbürste zur Reinigung des Fahrzeugdaches (nicht gezeigt).

Der Querträger 13 wird von zwei seitlichen Stützen 12 (Portalsäulen) getragen, von denen in Figur 2a nur die rechte Stütze 12 dargestellt ist. Auch an dieser Stütze 12 können Reinigungskomponenten oder weitere Aggregate zur Fahrzeugreinigung angeordnet sein (wie z.B. Felgenwäscher, nicht gezeigt).

Um die Orientierung innerhalb der Darstellung zu erleichtern, ist die dem zu reinigenden Fahrzeug 20 zugewandte Seite der Stütze 12 mit I (Innenseite) gekennzeichnet, während die der Fahrzeugaußenseite abgewandte Seite mit A (Außenseite) bezeichnet ist.

In Figur 2a nicht dargestellt sind die Reinigungsaggregate oder zusätzlichen Komponenten wie Bürsten oder Abdeckungen zum Spritzschutz. Solche Komponenten können sich jedoch nicht nur in Richtung der Innenseite I, sondern auch in Richtung der Außenseite A über die Breite der Stütze 12 hinaus erstrecken.

Weiterhin sind in Figur 2a die Komponenten der Sicherheitsvorrichtung dargestellt, die zur Vermeidung einer Kollision des Waschportals mit einem Kollisionskörper ausgelegt sind. Ein solcher Kollisionskörper kann sowohl ein Gegenstand als auch eine Person oder ein Tier sein.

Die Sicherheitsvorrichtung umfasst zwei Kollisionserkennungseinrichtungen 100 und 200. Die erste Kollisionserkennungseinrichtung 100 ist dabei in Richtung der Innenseite I der Stütze (auch Säule oder Portalsäule) 12 angeordnet, vorwiegend etwa in Flucht zu der Innenkante der Stütze 12, so dass sie relevante Kollisionen in diesem Bereich erfassen kann. Zu solchen relevanten Kollisionen zählen beispielsweise Kollisionen mit Fahrzeugteilen, wie einem Seitenspiegel. Falls ein Fahrzeugteil so weit in Richtung der Stütze 12 hineinragt, dass es beim Vorbeifahren des Waschportals 10 mit den Aggregaten des Waschportals kollidieren könnte, sollte eine solche Kollision vorauseilend durch die erste Kollisionserkennungseinrichtung 100 erkannt werden, bevor es zu einer Berührung mit den nachfolgenden Komponenten des Waschportals 10 kommt.

Zur Erfassung solcher Kollisionen umfasst die erste Kollisionserkennungseinrichtung 100 ein erstes Kollisionselement 120. Dieses ist so angeordnet, dass es sich bei einer Bewegung des Waschportals 10 entlang der Bewegungsrichtung B zuerst mit einem hervorstehenden Fahrzeugteil in Kontakt befindet, bevor die nachfolgenden Komponenten des Waschportals 10 oder die Innenkante der Säule 12 auf dieses Fahrzeugteil treffen würden.

Das erste Kollisionselement 120 kann eine im Wesentlichen vertikal verlaufende Struktur aufweisen. Beispielsweise kann es als Stange oder aus mehreren Stangenteilen ausgebildet sein. Darüber hinaus kann das Kollisionselement 120 insbesondere in Richtung der Innenseite I eine Form aufweisen, die an die Waschaggregate oder Komponenten der jeweiligen Stütze 12 angepasst ist.

In Figur 2a ist beispielhaft ein Abschnitt 121 dargestellt, in dem das erste Kollisionselement 120 weiter in den Innenraum hineinragt. Dies kann insbesondere dann vorteilhaft sein, wenn sich in diesem Bereich an der Stütze 12 ein spezielles Aggregat z.B. für die Radwäsche befindet, das ebenfalls weiter in den Innenraum hineinragt. Durch diese Anpassung kann sichergestellt werden, dass das erste Kollisionselement 120 auch Kollisionen mit solchen hervorstehenden Komponenten zuverlässig vorbeugt.

Die in Figur 2a gezeigte Form des ersten Kollisionselements 120 (im Wesentlichen linear erstreckend) ist lediglich beispielhaft und nicht einschränkend zu verstehen. Je nach konkreter Ausführung der Portalwaschanlage kann das Kollisionselement 120 eine andere Geometrie aufweisen, um den spezifischen Anforderungen gerecht zu werden, z.B mit einer gekrümmten Form.

Das erste Kollisionselement 120 kann aus einem geeigneten Material gefertigt sein, das den spezifischen Anforderungen der Anwendung entspricht. Dabei ist insbesondere darauf zu achten, dass das Material eine ausreichende Beständigkeit gegenüber Waschflüssigkeiten aufweist, um eine langfristige Funktionalität sicherzustellen. Gleichzeitig sollte das Kollisionselement 120 so beschaffen sein, dass es bei einer Kollision weder Schäden an einem Kollisionskörper noch Verletzungen bei einer Person verursacht. Dennoch sollte das Kollisionselement 120 eine ausreichende Steifigkeit besitzen, sodass die auf das Kollisionselement einwirkenden Kräfte möglichst direkt weitergegeben werden, um eine zuverlässige Erkennung des Kollisionsereignisses zu ermöglichen. Das erste und ein zweites Kollisionselement können aus einem Verbundmaterial, z.B. Carbon oder Metall hergestellt sein.

Die erste Kollisionserkennungseinrichtung 100 umfasst im oberen Bereich eine erste Aufhängeeinrichtung 110, die so ausgebildet ist, dass von ihr das erste Kollisionselement 120 herabhängt. Dabei ist das erste Kollisionselement 120 in einem definierten Abstand zur Stütze 12 angeordnet. Dieser Abstand ist so gewählt, dass das erste Kollisionselement 120 im Falle einer Kollision zunächst eine Ausweichbewegung ausführen kann, bevor das Waschportal 10 vollständig zum Stillstand gebracht wird.

Die erste Aufhängeeinrichtung 110 ist insbesondere so ausgestaltet, dass sie dem daran befestigten ersten Kollisionselement 120 eine Torsionsschwingung oder Nickschwingung ermöglicht, wobei diese Bewegung in einer im Wesentlichen horizontalen Ebene erfolgt. Dies kann beispielsweise dadurch realisiert werden, dass die erste Aufhängeeinrichtung 110 eine Öffnung aufweist, in der eine Befestigungskomponente für das erste Kollisionselement 120 so gelagert ist, dass sie ausreichendes Spiel für die Pendelbewegung besitzt.

Die erste Detektoreinrichtung 130 steht in Wirkverbindung mit dem ersten Kollisionselement 120 und ist fest oder starr mit der Säule 12 verbunden. Dadurch kann das erste Kollisionselement 120 im Falle einer Kollision mit einem Kollisionskörper eine Relativbewegung zu der ersten Detektoreinrichtung 130 ausführen.

Durch die Kraftübertragung im Falle einer Kollision der Sicherheitsvorrichtung mit einem Kollisionskörper wird eine Bewegung eines ersten Schieberelements ausgelöst. Diese Bewegung wird von der ersten Detektoreinrichtung 130 erfasst und dient als Indikator für eine drohende Kollision des Kollisionskörpers mit dem Waschportal.

Die Sicherheitsvorrichtung steht in Datenaustauch mit einer Steuereinheit, die basierend auf diesem detektierten Kollisionsereignis geeignete Maßnahmen, wie beispielsweise das Stoppen der Bewegung des Waschportals 10, einleitet.

Die zweite Kollisionserkennungseinrichtung 200 ist an der Stütze 12 auf der in Bewegungsrichtung B gesehenen Vorderseite, jedoch in Richtung der Außenseite A, angeordnet.

Analog zur ersten Kollisionserkennungseinrichtung 100 umfasst auch die zweite Kollisionserkennungseinrichtung 200 eine zweite Aufhängeeinrichtung 210, an der das zweite Kollisionselement 220 angeordnet ist. Dieses ist so ausgeführt, dass es ebenfalls eine Torsionsschwingung oder Nickschwingung, also eine im Wesentlichen horizontale Pendelbewegung ausführen kann.

Das zweite Kollisionselement 220 kann im Wesentlichen als lineare, vorzugsweise senkrecht bzw. vertikal verlaufende Stange ausgeführt sein. Auch für das zweite Kollisionselement 220 gelten ähnliche Materialanforderungen wie für das erste Kollisionselement 120, insbesondere hinsichtlich Widerstandsfähigkeit gegen Waschflüssigkeiten, schonender Kontakt mit Kollisionskörpern und ausreichender Steifigkeit zur Kraftübertragung. Die Sicherheitsvorrichtung und insbesondere die beiden Kollisionselemente und die insbesondere zwei Koppelelemente sind aus Metall gefertigt, insbesondere aus Metall und/oder einer Verbundmaterial, z.B. Carbon. Alternativ oder ergänzend können die Kollisionselemente und die insbesondere zwei Koppelelemente mit einem Kunststoff ummantelt sein.

Weiterhin steht das zweite Kollisionselement 220 in Wirkverbindung mit der zweiten Detektoreinrichtung 230, die fest oder starr mit der Säule 12 verbunden ist. Dadurch kann im Falle einer Kollision eine entsprechende Relativbewegung zwischen dem zweiten Schieberelement und der zweiten Detektoreinrichtung 230 erfolgen, wodurch das Kollisionsereignis erkannt und eine geeignete Reaktion, wie beispielsweise das Stoppen der Bewegung des Waschportals 10, eingeleitet werden kann.

Zur Erfassung einer - insbesondere durch eine Kollision verursachte - Krafteinwirkung auf das erste und/oder zweite Kollisionselement und/oder Koppelelement kann die erste und/oder zweite Detektoreinrichtung 130, 230 eine Sensoreinheit mit zumindest einem ersten und/oder zweiten Sensorelement 136, 236 umfassen.

Nachdem die erste Kollisionserkennungseinrichtung 100 und die zweite Kollisionserkennungseinrichtung 200 in ihren Grundzügen beschrieben wurden, wird nachfolgend das Konzept der Koppelelemente 300 erläutert.

Die ersten und zweiten Kollisionselemente 120, 220 verlaufen im Wesentlichen senkrecht, d.h. vertikal. Darüber hinaus umfasst die Sicherheitsvorrichtung ein oder mehrere Koppelelemente 300, die dazu dienen, die Erfassung von Kollisionen auf einen erweiterten Bereich auszudehnen.

Jedes Koppelelement 300 verläuft horizontal oder zumindest annähernd horizontal und ist sowohl mit dem ersten Kollisionselement 120 als auch mit dem zweiten Kollisionselement 220 mechanisch gekoppelt. Diese mechanische Kopplung ist jedoch so ausgeführt, dass sich die ersten und zweiten Kollisionselemente 120, 220 weiterhin unabhängig voneinander in ihren vorgesehenen Bewegungsrichtungen bewegen können. Insbesondere bleibt die Pendelbewegung der Kollisionselemente weiterhin möglich, sodass eine Kollisionserfassung uneingeschränkt gewährleistet ist. Dies wird dadurch ermöglicht, dass die Kopplung des Koppelementes zum ersten und/oder zum zweiten Kollisionselement genug Spiel aufweist, um eine Schiefstellung eines Kollisionselementes gegenüber dem andern zu ermöglichen.

Die Koppelelemente 300 sind bevorzugt in einem Bereich zwischen den jeweiligen Aufhängeeinrichtungen 110, 210 und den jeweiligen Detektoreinrichtungen 130, 230 angeordnet.

Es kann vorteilhaft sein, die Detektoreinrichtungen 130, 230 möglichst weit unten anzuordnen, da sie in dieser Position bereits minimale Ausschläge der Pendelbewegungen der jeweiligen Kollisionselemente besonders präzise erfassen können. Gleichzeitig sollten die Detektoreinrichtungen 130, 230 jedoch ausreichend weit oben angeordnet sein, um nicht durch von unten aufspritzende Flüssigkeiten oder Verschmutzungen beeinträchtigt zu werden.

Grundsätzlich ist es auch möglich, mindestens ein Koppelelement 300 unterhalb der Detektoreinrichtungen 130, 230 anzuordnen. In einer solchen Ausführung kann das Koppelelement 300 dazu beitragen, mögliche Kollisionen im unteren Bereich zwischen den Kollisionselementen 120, 220 zu erfassen, sodass auch dort eine zuverlässige Kollisionserkennung gewährleistet wird.

Die mechanische Kopplung eines Koppelelements 300 mit dem ersten Kollisionselement 120, d. h. dem in Richtung der Innenseite I angeordneten Kollisionselement, ist bevorzugt so ausgeführt, dass das Koppelelement 300 nicht oder nur möglichst wenig in Richtung des Fahrzeugs 20 über das erste Kollisionselement 120 hinausragt.

Dies kann beispielsweise dadurch erreicht werden, dass für die mechanische Verbindung zwischen dem ersten Kollisionselement 120 und dem Koppelelement 300 eine geeignete Ausnehmung oder Aussparung im ersten Kollisionselement 120 vorgesehen ist. In diese ragt das Koppelelement 300 hinein, sodass es im montierten Zustand möglichst bündig mit der Außenkontur des ersten Kollisionselements 120 abschließt. Auf der anderen Seite, d. h. in Richtung der Außenseite A bzw. am zweiten Kollisionselement 220, kann das Koppelelement 300 über das zweite Kollisionselement 220 hinausragen.

Ein solches Herausragen in Richtung der Außenseite A kann insbesondere gewünscht bzw. beabsichtigt sein. Durch diese seitliche Erweiterung der Koppelelemente 300 kann auch ein erweiterter Bereich in Richtung der Außenseite A überwacht werden. Dadurch lassen sich potentielle Kollisionen mit weiter außen liegenden Objekten oder Personen frühzeitig erkennen, selbst wenn diese sich außerhalb des direkten Bereichs der Kollisionselemente 120, 220 befinden.

**Figur** 2b zeigt einen Teil eines Waschportals 10 in Seitenansicht von der Außenseite des Wachportals 10. In der Seitenansicht zeigt sich die Aufhängeeinrichtung 210, an welcher das zweite Kollisionselement 220 frei beweglich (pendelnd) befestigt ist. Die Aufhängeeinrichtung 210 ist so ausgeführt, dass es ebenfalls eine Torsionsschwingung oder Nickschwingung des zweiten Kollisionselements 220, also eine im Wesentlichen horizontale Pendelbewegung, ausführen kann.

Die zweite Detektoreinrichtung 230 ist starr bzw. fix mit dem Waschportal 10 verbunden bzw. am Waschportal befestigt.

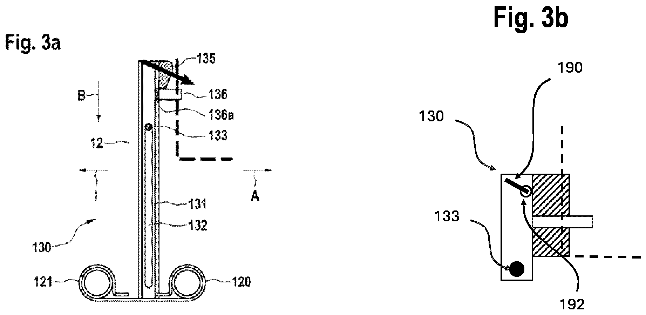

Figur 3a zeigt eine schematische Darstellung einer ersten Kollisionserkennungseinrichtung 100 gemäß einer Ausführungsform in einer Draufsicht.

Ein wesentliches Element der ersten Kollisionserkennungseinrichtung 100 ist das erste Schieberelement 131. Dieses ist mit dem ersten Kollisionselement 120 verbunden insbesondere mit dem zuvor beschriebenen oberen Abschnitt und/oder dem unteren Abschnitt 121.

Durch diese Verbindung kann das erste Schieberelement 131 einer möglichen Ausweichbewegung des ersten Kollisionselements 120 im Falle einer Kollision folgen. Dadurch wird eine Führung der Ausweichbewegung des ersten Kollisionselements 120 (Kraftkomponente parallel zu dem Schieberelement) zwischen dem ersten Kollisionselement 120 und der ersten Detektoreinrichtung 130 geschaffen, die es ermöglicht, eine Kollision zu detektieren.

Das erste Schieberelement 131 umfasst ferner eine erste Führungseinrichtung 132, die als Langloch oder eine vergleichbare Öffnung ausgeführt sein kann.

Das erste Schieberelement 131 kann beispielsweise aus einem ursprünglich massiven Material, wie einem Metall, gefertigt sein. In dieses Material kann die erste Führungseinrichtung 132, beispielsweise in Form eines Langlochs, durch Fräsen oder eine andere geeignete Bearbeitungsmethode eingebracht werden.

Alternativ kann die erste Führungseinrichtung 132 auch einen speziellen Einsatz umfassen. Ein solcher Einsatz kann aus einem Material bestehen, das besonders gute Gleiteigenschaften aufweist, um eine reibungsarme Bewegung innerhalb der Führungseinrichtung zu ermöglichen. Beispielsweise kann hierfür ein Kunststoff wie PTFE oder ein ähnliches Material verwendet werden.

Zur Führung des ersten Schieberelements 131 ist ein erstes Lagerelement 133 vorgesehen. Dabei kann es sich beispielsweise um einen Zapfen, Dorn oder ein vergleichbares Führungselement handeln. Mit dem Lagerelement 133 ist das Schieberelement 131 - insbesondere relativ zu dem ersten Sensorelement 136 der Detektoreinrichtung 130 - gelagert und/oder in dessen Bewegung geführt.

Vorzugsweise ist das erste Lagerelement 133 als rundes Element ausgeführt, da diese Form eine besonders gleichmäßige und reibungsarme Führung des ersten Schieberelements 131 ermöglicht. Der Durchmesser des ersten Lagerelements 133 ist insbesondere in der in Fig 3a dargestellten Nullposition des Schieberelementes 131 an die Breite der ersten Führungseinrichtung 132 im ersten Schieberelement 131 angepasst. "Nullposition" meint hier die Position des Schieberelementes ohne externe Krafteinwirkung auf die Sicherheitsvorrichtung.

Insbesondere kann das erste Lagerelement 133 einen geringfügig kleineren Durchmesser als die Breite der ersten Führungseinrichtung 132, außerhalb der Nullposition, aufweisen. Durch dieses gezielt gewählte Untermaß wird sichergestellt, dass das erste Schieberelement 131 zuverlässig innerhalb der ersten Führungseinrichtung 132 geführt wird, während gleichzeitig ein Verkanten oder Verhaken des Schieberelements verhindert wird. Durch das passgenaue Fluchten des Lagerelementes 133 in der Nullposition zu der Führungseinrichtung, wird ein spielfreies Halten des Schieberelementes in Nullposition ermöglicht.

In der ersten Detektoreinrichtung 130 ist eine erste Rückstelleinrichtung 139 (hier nicht gezeigt) vorgesehen, die eine erste Rückstellkraft 135 auf das Schieberelement 131 ausübt. Diese Rückstellkraft dient dazu, das erste Schieberelement 131 - und damit auch das erste Kollisionselement 120 - vor einer Kollision in einer definierten Ausgangsposition, nämlich in der Nullposition, zu halten.

Hierzu übt die erste Rückstelleinrichtung 139 (hier nicht gezeigt) an einer vorgegebenen Stelle eine vordefinierte Rückstellkraft 135 auf das erste Schieberelement 131 aus, wodurch sowohl die Richtung als auch die Stärke der Rückstellkraft festgelegt sind.

Grundsätzlich kann die erste Rückstelleinrichtung 139 (hier nicht gezeigt) als beliebige Vorrichtung ausgeführt sein, die die gewünschte Rückstellkraft auf das erste Schieberelement 131 ausübt. Denkbare Umsetzungen umfassen beispielsweise Federsysteme oder elastische Elemente.

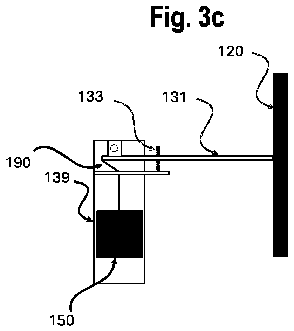

Es hat sich jedoch als besonders vorteilhaft erwiesen, die erste Rückstellkraft 135 über eine Einrichtung zu erzeugen, die mittels eines Gewichtes (einer vorgegebenen Masse) und eines Seilzugs 190 eine konstante Rückstellkraft auf das erste Schieberelement 131 ausübt. Diese Variante hat den Vorteil, dass die auf das erste Schieberelement 131 wirkende Kraft auch bei einer Auslenkung aus der Ruhelage gleichbleibt, da die Gewichtskraft unabhängig von der Position des Schieberelements konstant wirkt, siehe Fig 3c. In dieser Variante kann das Seil des Seilzugs 190 mit einem ersten Ende in der vom Waschportal abgewandten Seite des Schieberelements 131 fixiert sein. Der Seilzug kann über eine Öffnung bzw. Führung 192 in dem Schieberelement 131 nach unten geführt werden, wo ein zweites Ende des Seils an einem Gewicht fixiert ist, und die Rückstellkraft ausübt.

Die erste Detektoreinrichtung 130 umfasst ferner ein erstes Sensorelement 136, das dazu dient, eine Bewegung des ersten Schieberelements 131 zu detektieren und daraufhin ein entsprechendes Sensorsignal auszugeben. Das erste Sensorelement 136 kann am Portal befestigt sein und dient zur Erfassung einer Relativbewegung des Schieberelementes 131.

Im Falle einer Kollision und der dadurch ausgelösten Bewegung des ersten Schieberelements 131 erkennt das erste Sensorelement 136 diese Bewegung und gibt ein elektrisches Signal an die Steuerung der Sicherheitsvorrichtung weiter.

Grundsätzlich können verschiedene Sensortechnologien eingesetzt werden, sofern sie in der Lage sind, eine Bewegung des ersten Schieberelements 131 aus der Ruhelage zuverlässig zu erfassen. Beispielsweise wären auch optische Systeme wie Gabellichtschranken oder vergleichbare Sensoren denkbar. Aufgrund der rauhen Betriebsbedingungen in einer Waschanlage, insbesondere durch das Verwirbeln von Wasser, Schmutz und Reinigungsmitteln, sind jedoch vorzugsweise mechanische Sensorlösungen zu verwenden.

Bevorzugt kann das erste Sensorelement 136 daher als mechanischer Schalter, Magnet- oder Induktionsschalter ausgeführt sein. Eine besonders robuste und zuverlässige Lösung besteht darin, dass an dem ersten Schieberelement 131 ein metallisches Gegenstück 136a vorgesehen ist. In diesem Fall kann das erste Sensorelement 136, bei dem es sich um einen induktiven Sensor handelt, die Bewegung dieses Gegenstückes 136a erfassen und daraufhin ein entsprechendes Sensorsignal ausgeben.

Das erste und/oder zweite Sensorelement 136, 236 können vorzugsweise fest oder starr mit dem Waschportal 10 verbunden oder daran befestigt sein, um die Bewegung des ersten und/oder zweiten Schieberelementes 131, 231 - und im Falle eines induktiven Sensorelementes: insbesondere eines metallischen Gegenstücks daran - zu erfassen.

Die Dimensionierung der ersten Führungseinrichtung 132, insbesondere die Länge des Langlochs, ist ausgelegt, dass sie im Falle einer Kollision einen ausreichenden Bewegungsbereich für das erste Schieberelement 131 ermöglicht.

Insbesondere muss die erste Führungseinrichtung 132 eine Bewegung des ersten Schieberelements 131 in einem Bereich erlauben, der mindestens so groß ist, dass das erste Kollisionselement 120 eine vollständige Ausweichbewegung ausführen kann, bis der nach der Kollision eingeleitete Anhaltevorgang des Waschportals 10 abgeschlossen ist und das Waschportal 10 vollständig zum Stillstand gekommen ist.

Die erforderliche Länge der ersten Führungseinrichtung 132 sowie die Ausgestaltung der ersten Aufhängeeinrichtung 110, insbesondere der Abstand des ersten Kollisionselements 120 zur Stütze 12 des Waschportals 10, hängen dabei unter anderem von der maximalen Bewegungsgeschwindigkeit des Waschportals 10, der Masse des Waschportals 10, die im Kollisionsfall abgebremst werden muss, sowie den Eigenschaften der für den Anhalteprozess eingesetzten Bremssysteme oder Steuermechanismen und der Reibungsbedingungen zwischen gebremsten Rad- und der Laufschiene ab. Diese Parameter bestimmen, wie groß der notwendige Ausweichweg des ersten Kollisionselements 120 sein muss, um sicherzustellen, dass eine Kollision des Waschportals 10 mit einem Kollisionskörper zuverlässig vermieden wird.

**Figur 3b** zeigt eine schematische Darstellung der ersten Detektoreinrichtung 130, wie in Fig. 3a gezeigt, gemäß einer Ausführungsform in einer Draufsicht.

Die erste Detektoreinrichtung 130 dient zur Erfassung einer durch eine Kollision verursachte Bewegung des ersten Kollisionselementes 120. Ein erstes Lagerelement 133 kann dazu ausgebildet sein, ein erstes Schieberelement 131 relativ zu dem Sensorelement der ersten Detektoreinrichtung 130 verschiebbar und/oder verdrehbar zu bewegen. Das erste Schieberelement 131 kann mit dem ersten Kollisionselement 120 verbunden sein, so dass eine Bewegung des ersten Kollisionselementes 120 auf das erste Schieberelement 131 übertragen wird.

Die Rückstellraft 135, mit der das erste Schieberelement 131 zurückgehalten wird, wird von einem ersten Seilzug 190 (in Fig. 3c gezeigt) auf das Schieberelement übertragen. Dieser Seilzug 190 wird durch eine Bohrung in der Detektoreinrichtung 130 nach unten zum Rückstellgewicht 139 geführt.

**Figur** 3c zeigt eine schematische Darstellung der ersten Detektoreinrichtung 130 umfassend die erste Rückstelleinrichtung 139 in einer Seitenansicht.

In der ersten Detektoreinrichtung 130 ist eine erste Rückstelleinrichtung 139 vorgesehen, die über die Gewichtskraft eines Rückstellgewichtes 150 (in der Figur als schwarz gefüllter quadratischer Block dargestellt) eine erste Rückstellkraft 135 auf das Schieberelement 131 ausübt. Diese dient dazu, das erste Schieberelement 131 - und damit auch das erste Kollisionselement 120 - vor oder nach einer Kollision in einer definierten Ausgangsposition zu halten. Das Seil des Seilzugs 190 kann mit einem ersten Ende an der vom Waschportal abgewandten Seite des Schieberelements 131 fixiert sein. Der Seilzug 190 kann über eine Öffnung bzw. Führung in dem Schieberelement 131 nach unten geführt werden, wo ein zweites Ende des Seils an einem Rückstellgewicht 150 fixiert ist, und die Rückstellkraft ausübt.

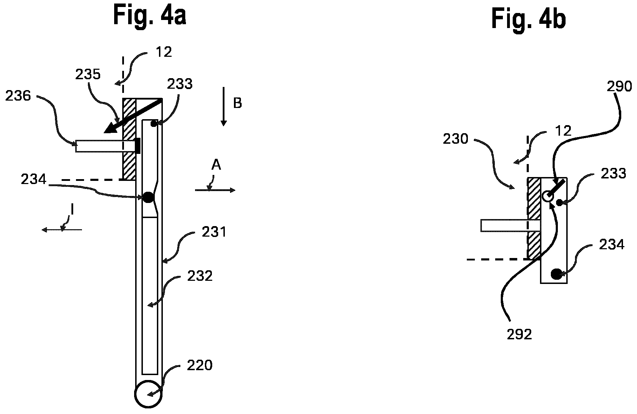

**Figur** 4a zeigt eine schematische Darstellung einer Ausführungsform der zweiten Detektoreinrichtung 230. Diese kann eine Modifikation der zuvor beschriebenen ersten Detektoreinrichtung 130 darstellen.

Das zweite Schieberelement 231 kann mit dem zweiten Kollisionselement 220 verbunden sein. Diese mechanische Kopplung ermöglicht es, dass eine Krafteinwirkung auf das zweite Kollisionselement 220 zu einer entsprechenden Bewegung des zweiten Schieberelements 231 relativ zu oder innerhalb der zweiten Detektoreinrichtung 230 führt.

Analog zur ersten Detektoreinrichtung 130 ist die zweite Detektoreinrichtung 230 ebenfalls zu einer zweiten Führungseinrichtung 232 mechanisch gekoppelt, die in Form eines Langlochs oder einer vergleichbaren Öffnung ausgeführt sein kann. Entsprechend gelten für die zweite Führungseinrichtung 232 grundsätzlich die gleichen technischen Anforderungen wie für die bereits beschriebene erste Führungseinrichtung 132 der ersten Detektoreinrichtung 130.

Im Gegensatz zur ersten Detektoreinrichtung 130, die lediglich ein einziges erstes Lagerelement 133 umfasst, kann die zweite Detektoreinrichtung 230 zwei zweite Lagerelemente 233 und 234 aufweisen. Diese beiden zweiten Lagerelemente 233, 234 sind als Zapfen, Dorn oder ein vergleichbares Führungselement ausgeführt. Ihr Durchmesser ist an die Breite der zweiten Führungseinrichtung 232 bzw. des Langlochs angepasst, um eine präzise Führung des zweiten Schieberelements 231 zu gewährleisten.

Das vordere Lagerelement 234, welches näher an dem Kollisionselement 220 ausgebildet ist (auch als erster Zapfen bezeichnet) weist einen Durchmesser auf, der gegenüber der Breite der zweiten Führungseinrichtung 232 in der Nullposition nur ein relativ geringes Untermaß besitzt. Durch dieses geringe Spiel wird sichergestellt, dass das zweite Schieberelement 231 innerhalb der zweiten Führungseinrichtung 232 in der Nullposition keine signifikante seitliche Bewegung ausführen kann. Das geringe Untermaß dient dabei lediglich dazu, ein Verkanten oder Verklemmen des zweiten Schieberelements 231 während einer Längsbewegung zu vermeiden.

Das hintere Lagerelement 233, welches entfernter von dem Kollisionselement 220 ausgebildet ist (auch als zweiter Zapfen bezeichnet) weist dagegen einen Durchmesser auf, der deutlich kleiner sein kann als die Breite der zweiten Führungseinrichtung 232, insbesondere im Bereich der zweiten Führungseinrichtung 232, in dem sich das hintere Lagerelement 233 in der Ruhestellung befindet.

Diese Differenz kann auf zwei verschiedene Arten erreicht werden:
Einerseits kann für das hintere Lagerelement 233 ein geringerer Durchmesser gewählt werden als für das vordere Lagerelement 234. Zusätzlich oder alternativ kann die zweite Führungseinrichtung 232, insbesondere das Langloch, so ausgestaltet sein, dass es im Bereich des hinteren Lagerelements 233 ein größeres Spiel aufweist.

Die zweite Detektoreinrichtung 230 umfasst eine zweite Rückstelleinrichtung 239 (hier nicht gezeigt), deren Grundprinzip der zuvor beschriebenen ersten Rückstelleinrichtung 139 (hier nicht gezeigt) entspricht und auf das zweite Schieberelement eine Rückstellkraft 235 ausübt.

Die zweite Rückstelleinrichtung ist dazu ausgebildet, eine Rückstellkraft 235 auf das zweite Schieberelement 231 auszuüben, um dieses in einer definierten Ruhelage (auch: Nullposition) zu halten. Hierbei wird das zweite Schieberelement 231 in Bewegungsrichtung B so weit nach vorne gedrückt, wie es durch die Kombination aus zweiter Führungseinrichtung 232 und hinterem zweiten Lagerelement 233 möglich ist.

Zusätzlich kann die zweite Rückstellkraft 235 eine seitliche Kraftkomponente auf das zweite Schieberelement 231 ausüben. Dadurch wird das zweite Schieberelement 231 über die zweite Führungseinrichtung 232 am hinteren Lagerelement 233 so positioniert, dass es sich in der definierten Ruhelage befindet. Diese Positionierung dient dazu, das zweite Schieberelement 231 während des regulären Betriebs der Sicherheitsvorrichtung in einer definierten Ausgangsstellung zu halten, ermöglicht jedoch eine gezielte Auslenkung aus dieser Ruhelage, wenn eine äußere Krafteinwirkung - beispielsweise durch eine Kollision - erfolgt. Diese Funktion ist schematisch durch die Pfeilrichtung für die zweite Rückstellkraft 235 in Figur 4a illustriert.

Die Anordnung der zweiten Detektoreinrichtung 230 ermöglicht es, dass das zweite Schieberelement 231 bei einer Krafteinwirkung, beispielsweise im Falle einer Kollision, mit einer Kraftkomponente entgegen der Bewegungsrichtung B eine mitunter lineare Verschiebung ausführen kann.

Diese Bewegung erfolgt in einer Richtung, die durch die zweite Führungseinrichtung 232 und die beiden zweiten Lagerelemente 233, 234 vorgegeben ist. Da die zweite Führungseinrichtung 232 eine Langloch-Geometrie aufweist und die beiden zweiten Lagerelemente 233, 234 das zweite Schieberelement 231 darin führen, kann das zweite Schieberelement 231 bei einer geeigneten Krafteinwirkung entlang der Längsrichtung des Langlochs verschoben werden.

Die seitliche Bewegung des zweiten Schieberelements 231 ist dagegen durch die Verwendung der beiden zweiten Lagerelemente 233, 234 stark eingeschränkt. Eine geringe seitliche Relativbewegung ist jedoch insbesondere in der Nullstellung möglich, da sie durch das Spiel zwischen dem hinteren zweiten Lagerelement 233 und der Breite der zweiten Führungseinrichtung 232 in diesem Bereich gezielt zugelassen wird.

Die Dimensionierung der zweiten Führungseinrichtung 232 und des hinteren zweiten Lagerelements 233 ist dabei so gewählt, dass diese geringe seitliche Bewegung ausreichend ist, um von dem zweiten Sensorelement 236 zuverlässig detektiert zu werden, wenn eine seitliche Auslenkung des zweiten Schieberelements 231 auftritt.

Die zweite Detektoreinrichtung 230 umfasst ein zweites Sensorelement 236, das dazu dient, eine Bewegung des zweiten Schieberelements 231 zu detektieren und daraufhin ein entsprechendes Sensorsignal auszugeben. Das zweite Sensorelement 236 kann fest am Portal ausgebildet sein und im Falle eines induktiven Sensors mit einem metallischen Gegenstück am zweiten Schieberelement 231 in Wirkverbindung stehen.

Das zweite Sensorelement 236 ist im Wesentlichen analog zum ersten Sensorelement 136 der ersten Detektoreinrichtung 130 aufgebaut. Es kann eine Bewegung des zweiten Schieberelements 231 in Längsrichtung sowie eine seitliche Bewegung erfassen. Auch hier sind verschiedene Sensortechnologien denkbar, wobei elektrische Sensoren, insbesondere induktive Sensoren oder mechanische Schalter, bevorzugt werden.

Für eine detaillierte Beschreibung der möglichen Ausführungsformen und Funktionsweisen des Sensorelements wird auf die Ausführungen zum ersten Sensorelement 136 verwiesen.

Alternativ kann die zweite Detektoreinrichtung 230 auch keine Modifikation der zuvor beschriebenen ersten Detektoreinrichtung 130 darstellen und dieser bis auf eine zur Mittelebene gespiegelte Ausführung entsprechen.

**Figur 4b** zeigt ein Detail der schematischen Darstellung der zweiten Detektoreinrichtung 230, wie in Fig. 4a gezeigt, gemäß einer Ausführungsform in einer Draufsicht.

Die zweite Detektoreinrichtung 230 kann zwei zweite Lagerelemente 233 und 234 umfassen, welche dazu ausgebildet sind, das zweite Schieberelement 231 relativ zu der zweiten Detektoreinrichtung 230 verschiebbar und verdrehbar zu bewegen.

Die Rückstellkraft 235, mit der das Schieberelement 231 zurückgehalten wird, wird von dem Seilzug auf das Schieberelement 231 übertragen. Dieser Seilzug wird durch eine Öffnung, insbesondere Bohrung 292 in der Detektoreinrichtung 230 nach unten zum Rückstellgewicht 250 geführt.

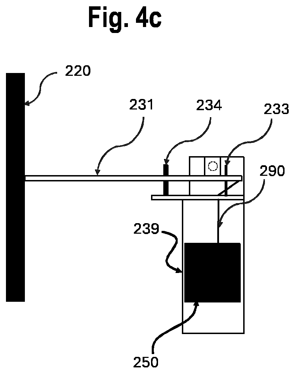

**Figur 4c** zeigt eine schematische Darstellung der zweiten Detektoreinrichtung 230 umfassend die zweite Rückstelleinrichtung 239 in einer Seitenansicht.

In der zweiten Detektoreinrichtung 230 ist eine zweite Rückstelleinrichtung 239 vorgesehen, die über die Gewichtskraft des Rückstellgewichtes 250 eine zweite Rückstellkraft 235 auf das zweite Schieberelement 231 ausübt. Diese dient dazu, das zweite Schieberelement 231 - und damit auch das zweite Kollisionselement 220 - vor oder nach einer Kollision in einer definierten Ausgangsposition (auch: Nullposition) zu halten. Das Seil des Seilzugs 290 kann mit einem ersten Ende an der vom Waschportal abgewandten Seite des Schieberelements 231 fixiert sein. Der Seilzug kann über eine Öffnung bzw. Führung 292 in dem Schieberelement 231 nach unten geführt werden, wo ein zweites Ende des Seils an einem Rückstellgewicht 250 fixiert ist, und die Rückstellkraft ausübt.

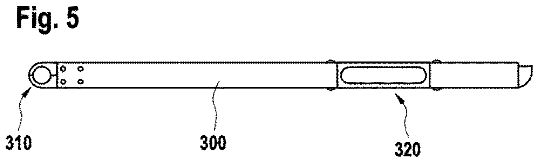

**Figur 5** zeigt eine schematische Darstellung eines Koppelelements 300 gemäß einer möglichen Ausführungsform.

Wie bereits zuvor ausgeführt, ist das Koppelelement 300 sowohl mit dem ersten Kollisionselement 120 als auch mit dem zweiten Kollisionselement 220 mechanisch gekoppelt. Die mechanische Kopplung ist dabei so realisiert, dass sich die beiden Kollisionselemente 120, 220 weiterhin unabhängig voneinander bewegen können.

Wie in Figur 5 zu erkennen ist, umfasst das Koppelelement 300 eine erste Koppelstelle 310, an der es mit dem ersten Kollisionselement 120 gekoppelt wird. In der hier dargestellten Ausführungsform ist die erste Koppelstelle 310 als Materialstück, beispielsweise eine Platte, ausgebildet, in die eine Öffnung eingebracht ist. Durch diese Öffnung kann das erste Kollisionselement 120 hindurchgeführt werden, wodurch eine mechanische Kopplung zwischen dem Koppelelement 300 und dem ersten Kollisionselement 120 hergestellt wird.

Die erste Koppelstelle 310 kann dabei so ausgeführt sein, dass das Koppelelement 300 nicht oder nur in geringem Maße über den Außendurchmesser des ersten Kollisionselements 120 in Richtung der Innenseite I hinausragt. Dies kann beispielsweise durch eine entsprechende Rille oder Vertiefung am ersten Kollisionselement 120 realisiert werden, in welche das Koppelelement 300 eingebettet ist.

Je nach Ausgestaltung und Anwendungsfall sind jedoch auch andere Ansätze für eine geeignete mechanische Kopplung zwischen dem Koppelelement 300 und dem ersten Kollisionselement 120 möglich. Beispielsweise könnte eine alternativ geformte Befestigungsstruktur vorgesehen sein.

Wie in Figur 5 weiter zu erkennen ist, umfasst das Koppelelement 300 eine zweite Koppelstelle 320, insbesondere ein Langloch, an der es mit dem zweiten Kollisionselement 220 mechanisch gekoppelt werden kann.

Zur mechanischen Kopplung kann in das Koppelelement 300 eine Führung in Form eines Langlochs oder einer vergleichbaren Öffnung eingebracht werden. Diese Führung ermöglicht eine definierte Relativbewegung des zweiten Kollisionselements 220 innerhalb der zweiten Koppelstelle 320, während gleichzeitig die gewünschte mechanische Verbindung mit dem Koppelelement 300 gewährleistet wird.

Alternativ ist es denkbar, an dieser Stelle einen speziellen Einsatz in das Koppelelement 300 zu integrieren. Auch dieser Einsatz kann eine Führung in Form eines Langlochs oder einer vergleichbaren Öffnung aufweisen. Durch die Verwendung eines separaten Einsatzes kann die Führung gezielt optimiert werden, beispielsweise durch den Einsatz von Materialien mit besonders guten Gleiteigenschaften und geringer Reibung.

Ein solcher Einsatz kann aus einem geeigneten Metall oder einem hochwertigen Kunststoff, beispielsweise PTFE (Polytetrafluorethylen) oder einem vergleichbaren Werkstoff, gefertigt sein. Diese Materialien bieten eine besonders geringe Reibung und ermöglichen eine reibungsarme Bewegung des zweiten Kollisionselements 220 innerhalb der Führung der zweiten Koppelstelle 320.

Die folgenden Figuren dienen dazu, das Verhalten der Sicherheitsvorrichtung bei verschiedenen Kollisionsszenarien zu veranschaulichen.

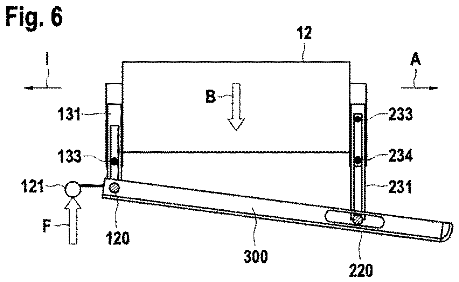

**Figur 6** zeigt eine schematische Darstellung eines Kollisionsszenarios bei einer frontalen Kollision mit der Sicherheitsvorrichtung im Innenbereich auf der Seite des ersten Kollisionselements 120. Exemplarisch ist die Krafteinwirkung F im Innenbereich, insbesondere an dem in Richtung Innenseite I versetzten Element 121 des ersten Kollisionselements 120 dargestellt. Das gleiche Prinzip gilt jedoch auch für eine Kollision an einer anderen Stelle des ersten Kollisionselements 120.

Die Bewegungsrichtung des Waschportals 10, einschließlich der Stütze 12, ist wie in den vorherigen Figuren mit dem Bezugszeichen B gekennzeichnet. Die mechanische Kraft F, die durch ein Kollisionskörper oder eine Person bei einer Kollision aufgebracht wird, ist durch einen Pfeil dargestellt. Die Richtung dieses Pfeils gibt zugleich die Richtung der auf das erste Kollisionselement 120 einwirkenden Kraft an.

In dem in Figur 6 dargestellten Szenario, bei dem das erste Kollisionselement 120 frontal mit einem Kollisionskörper kollidiert, übt der Kollisionskörper eine Kraft F auf das erste Kollisionselement 120 bzw. auf dessen nach innen versetzten Elementes 121 aus.

Diese Krafteinwirkung führt dazu, dass das erste Schieberelement 131 entgegen der Bewegungsrichtung B des Waschportals 10 verschoben wird. Wie bereits zuvor erläutert, kann diese Verschiebung detektiert werden, beispielsweise durch das erste Sensorelement 136, das daraufhin ein entsprechendes Sensorsignal ausgibt.

Wie weiter in Figur 6 zu erkennen ist, verdreht sich bei dieser Bewegung das Koppelelement 300 leicht. Dies ermöglicht die unabhängige Bewegung des ersten Schieberelements 131, ohne dass die Position des zweiten Kollisionselements 220 in der zweiten Detektoreinrichtung 230 verändert wird.

Aufgrund der drehbaren Kopplung zwischen dem Koppelelement 300 und dem ersten Schieberelement 131 sowie der drehbaren und verschiebbaren Kopplung zwischen dem Koppelelement 300 und dem zweiten Kollisionselement 220, kann sich das erste Kollisionselement 120 unabhängig bewegen, ohne dass eine Bewegung des zweiten Kollisionselements 220 erfolgt bzw. erfolgen muss.

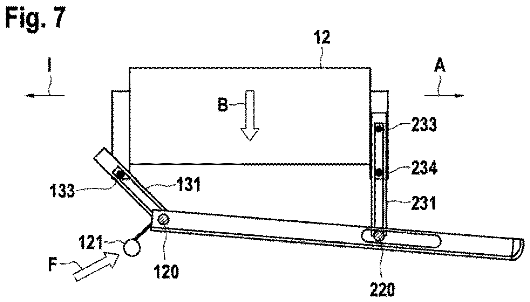

**Figur 7** zeigt eine schematische Darstellung eines Kollisionsszenarios bei einer Kollision des ersten Kollisionselements 120 mit einer seitlichen Krafteinwirkung, insbesondere einer Kraftkomponente, die von der Innenseite I in Richtung der Außenseite A wirkt.

In diesem Szenario, das z.B. bei der Kollision des ersten Kollisionselementes mit einer leicht geöffneten Fahrzeugtür entsteht, wird sich das erste Kollisionselement 120 nicht ausschließlich in Richtung der Stütze 12 bewegen - zusätzlich führt es eine seitliche Ausweichbewegung aus. Diese seitliche Bewegung wird insbesondere dadurch ermöglicht, dass das erste Schieberelement 131 um das erste Lagerelement 133 eine Drehbewegung ausführt.

Wie in Figur 7 weiter zu erkennen ist, führt das Koppelelement 300 dabei eine entsprechende Ausgleichsbewegung aus, die durch die verschiebbare und drehbare Kopplung an das zweite Kollisionselement 220 ermöglicht wird. Dadurch bleibt das zweite Kollisionselement 220 auch in diesem Fall in seiner Ruhelage, sodass sich das zweite Schieberelement 231 nicht bewegt.

Das erste Schieberelement führt eine Drehbewegung um das Lagerelement, insbesondere den Zapfen 133 durch. Im Rahmen dieser Bewegung wird das Koppelelement in der Verbindung zum ersten Kollisionselement mitgenommen, wobei sich das erste Kollisionselement im Koppelelement frei drehen kann. Das Koppelelement ist mit dem zweiten Kollisionselement über ein Langloch gekoppelt. Über diese Verbindung kann sich das Koppelelement linear und rotatorisch auf dem zweiten Kollisionselement verschieben, ohne dass dabei eine Kraft übertragen wird. Die zweite Koppelstange wird durch die Bewegung der ersten Koppelstange nicht beeinflusst.

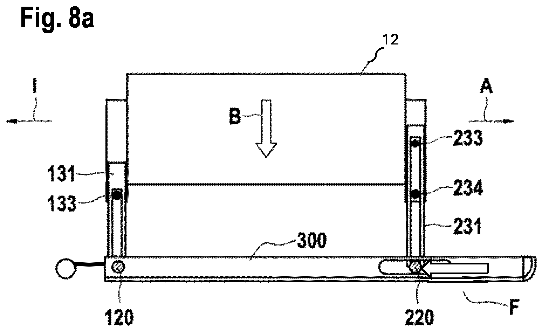

**Figur 8a** zeigt eine schematische Darstellung eines Kollisionsszenarios bei einer Krafteinwirkung auf das zweite Kollisionselement 220 in einer ersten Ausführungsform der zweiten Detektoreinrichtung mit zwei zweiten Zapfen 233, 234.

Bei einer seitlichen Krafteinwirkung F, die von außen in Richtung des zweiten Kollisionselements 220 wirkt, kann sich das zweite Schieberelement 231 minimal seitlich bewegen. Diese geringe Bewegung wird durch das hintere zweite Lagerelement 233 ermöglicht, dessen Durchmesser bewusst kleiner gewählt ist als die Breite der zweiten Führungseinrichtung 232 in diesem Bereich.

Eine solche Kollision kann beispielsweise auftreten, wenn sich das Waschportal 10 einer auf der Außenseite A stehenden Person nähert. Falls die Person erschrickt oder reflexartig in Richtung des zweiten Kollisionselements 220 greift, etwa durch eine unbewusste Schutzbewegung mit dem Arm, kann dies zu einer kurzzeitigen Krafteinwirkung mit einer seitlichen Komponente führen. In diesem Fall wird die Kraft von der zweiten Detektoreinrichtung erfasst.

In der hier beschriebenen ersten Ausführung der zweiten Detektoreinrichtung (zwei zweite Lagerelemente) wird keine signifikante (rotatorische) Auslenkung des Schieberelements ermöglicht und kein signifikanter Nachlaufweg freigegeben. Jedoch wird ein Nachlaufweg senkrecht zu dem Schieberelement (quer zum Fahrweg) in diesem Fall auch nicht benötigt, da sich durch die Fahrbewegung der Portalwaschanlage der Abstand zum Rand nicht verändert.

Das gleiche Bewegungsverhalten würde sich ergeben, wenn die Kraft in der gleichen Richtung nicht auf das zweite Kollisionselement 220 wirkt, sondern auf das Koppelelement 300. Dieses würde die Kraft an das zweite Kollisionselement 120 weitergeben, das in dieser Kraftrichtung starr gelagert ist.

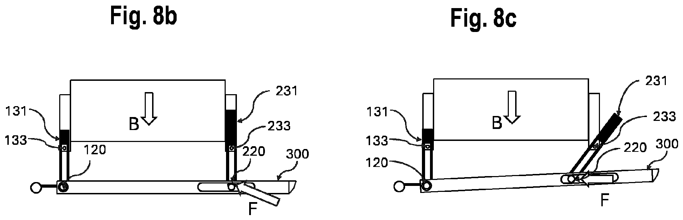

**Figur 8b** zeigt eine schematische Darstellung eines Kollisionsszenarios bei einer Krafteinwirkung auf das zweite Kollisionselement 220 in einer zweiten Ausführungsform der zweiten Detektoreinrichtung mit nur einem zweiten Zapfen 233.

In dieser zweiten Ausführung ist das zweite Schieberelement 231 über nur ein zweites Lagerelement 233 in der Führungseinrichtung 232 geführt - im Gegensatz zu der ersten Ausführung der zweiten Detektoreinrichtung gemäß Fig. 8a, die zwei zweite Lagerelemente 233, 234, insbesondere zwei zweite Zapfen aufweist.

In dieser Ausführung verhält sich die zweite Kollisionserkennungseinrichtung 200 wie die erste Kollisionserkennungseinrichtung 100; bzw. sie ist entsprechend aufgebaut - nur um die dazwischen liegende Mittelebene gespiegelt.

Bei einer seitlichen Krafteinwirkung, die von außen in Richtung des zweiten Kollisionselements 220 auf selbiges wirkt, erfährt das zweite Schieberelement 231 keine seitliche Kraft. Die Kraft wird auf das erste Kollisionselement 120 übertragen, das in diese Kraftrichtung starr gelagert ist und sich daher nicht bewegt.

Eine solche Kollision kann beispielsweise auftreten, wenn sich das Waschportal 10 einer auf der Außenseite A stehenden Person nähert. Falls die Person erschrickt oder reflexartig in Richtung des zweiten Kollisionselements 220 greift, etwa durch eine unbewusste Schutzbewegung mit dem Arm, kann dies zu einer kurzzeitigen Krafteinwirkung mit einer seitlichen Komponente führen. In diesem Spezialfall wird die Kraft von keiner Detektoreinrichtung erkannt und es wird kein Nachlaufweg freigegeben, was allerdings auch aufgrund der quer zur Bewegungsrichtung B verlaufenden Krafteinwirkung einer seitlich neben dem Portal befindlichen Person nicht notwendig ist.

**Figur 8c** zeigt eine schematische Darstellung eines Kollisionsszenarios in der zweiten Ausführung der zweiten Detektoreinrichtung mit nur einem Zapfen 233, insbesondere bei einer seitlichen Krafteinwirkung auf das zweite Kollisionselement 220 in Richtung des ersten Kollisionselements 120, insbesondere nachdem dieses eine Bewegung zum Ausgleich der Krafteinwirkung durchgeführt hat. In dieser Ausführung der Führung des zweiten Schieberelementes an bzw. entlang der zweiten Detektoreinrichtung ist das zweite Schieberelement im Gegensatz zu der zweiten Detektoreinrichtung gemäß Fig. 8a nur über ein zweites Lagerelement 233, insbesondere einen zweiten Zapfen mit der zweiten Detektoreinrichtung gekoppelt.

In dieser Ausführung verhält sich die zweite Kollisionserkennungseinrichtung 200 wie die erste Kollisionserkennungseinrichtung 100, und ist entsprechend aufgebaut - nur um die dazwischen liegende Mittelebene gespiegelt.

Bei einer seitlichen Krafteinwirkung, die von außen in Richtung des ersten Kollisionselements 120 auf das zweite Kollisionselement 220 wirkt, erfährt das zweite Schieberelement 231 eine seitliche Kraft. Das zweite Schieberelement 231 wird in Richtung des Fahrzeugs (nach innen) ausgelenkt. Die Auslenkung (Verdrehung) des zweiten Schieberelements 231 kann von der zweiten Detektorreinrichtung detektiert werden.

Die Kollisionskraft wirkt seitlich auf das zweite Kollisionselement 220, das daraufhin um das zweite Lagerelement 233 einschwenkt. Das Koppelelement 300 wird aufgrund der drehbaren Führung des zweiten Kollisionselements 220 in dem Langloch des Koppelelements leicht eingeschwenkt. Diese Bewegung wird an der Kopplungsstelle zum ersten Kollisionselement ausgeglichen, mit dem das Kollisionselement drehbar gelagert ist. Die Bewegung des zweiten Kollisionselements erfolgt demnach unabhängig von der Bewegung des ersten Kollisionselements.

In Figuren 8b und c sind jeweils die zweite Ausführung der zweiten Detektoreinrichtung (mit nur einem zweiten Lagerelement) mit unterschiedlichen Angriffspunkten für die Kraft in der im Wesentlichen gleichen Kraftrichtung dargestellt. Das zweite Schieberelement wird mit nur einem zweiten Zapfen, statt mit zwei zweiten Zapfen geführt. Die sonstigen Bewegungen der Sensoreinrichtung, die in den Figuren 6-7 und 9-12 dargestellt sind, sind identisch. Dies liegt an den unabhängigen Bewegungen der beiden Kollisionserkennungseinrichtungen und den Kopplungen zum Koppelelement. In den Figuren 4a, 4b, 4c, 6, 7, 8a, 9, 10, 11a, 11b, 12a, 12b ist jeweils die erste Ausführung der zweiten Detektoreinrichtung (mit zwei zweiten Lagerelementen) gezeigt.

In den folgenden Figuren wird das Verhalten der Sicherheitsvorrichtung bei einer Kollision eines Koppelelements 300 mit einem Kollisionskörper oder einer Person in weiteren Kollisionsszenarien beschrieben.

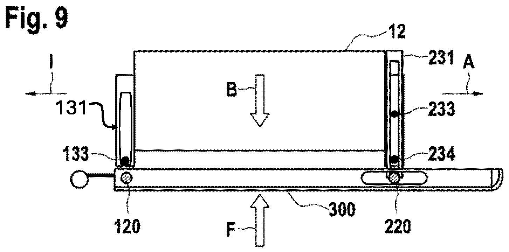

**Figur 9** zeigt den Fall, in dem die Kollision und die damit verbundene Krafteinwirkung F im Zwischenbereich, insbesondere am Koppelelement 300 etwa mittig im Bereich zwischen dem ersten Kollisionselement 120 und dem zweiten Kollisionselement 220 auftritt.

Bei einer solchen Kollision wird das Koppelelement 300 in Bewegungsrichtung B derart beeinflusst, dass sowohl das erste Kollisionselement 120 als auch das zweite Kollisionselement 220 entsprechend mitbewegt werden. Dadurch erfolgt eine Bewegung der beiden Schieberelemente 131, 231 entgegen der Bewegungsrichtung B des Waschportals 10. Eine synchrone Bewegung der beiden Schieberelemente erfolgt bei einem mittigen Kraftangriff, wenn die die erste und zweite Rückstellkraft in Fahrtrichtung gleich groß sind.

Infolgedessen werden sowohl das erste Sensorelement 136 als auch das zweite Sensorelement 236 aktiviert, wodurch die Kollision detektiert wird.

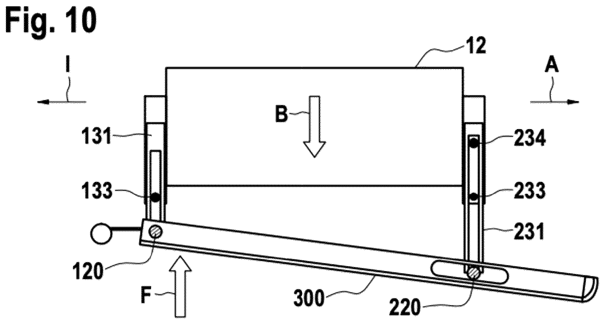

**Figur 10** zeigt den Fall, in dem eine Kollision mit dem Koppelelement 300 in der Nähe des ersten Kollisionselements 120 auftritt.

Bei einer solchen Kollision wird bevorzugt lediglich das erste Schieberelement 131 entgegen der Bewegungsrichtung B des Waschportals 10 nach hinten verschoben. Diese Bewegung führt zur Detektion der Kollision durch das erste Sensorelement 136, welches ein entsprechendes Sensorsignal ausgibt.

Aufgrund der verschiebbaren und drehbaren Kopplung zwischen dem Koppelelement 300 und dem zweiten Kollisionselement 220 verbleibt das zweite Kollisionselement 220 in seiner Ruhelage. Somit bleibt auch das zweite Schieberelement 231 unverändert in seiner Ausgangsposition.

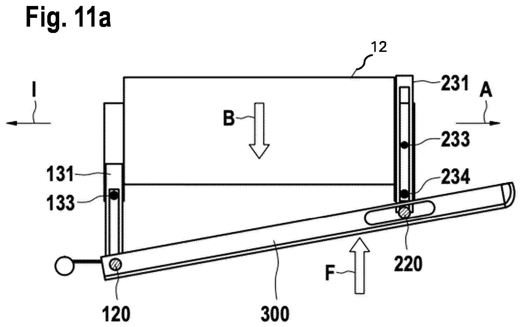

**Figur 11a** zeigt den Fall, in dem eine Kollision mit dem Koppelelement 300 im Zwischenbereich, insbesondere zwischen dem ersten Kollisionselement 120 und dem zweiten Kollisionselement 220 auftritt, jedoch in der Nähe des zweiten Kollisionselements 220.

In diesem Szenario führt die Krafteinwirkung F dazu, dass sich das zweite Kollisionselement 220 und damit das zweite Schieberelement 231 entgegen der Bewegungsrichtung B des Waschportals 10 verschieben. Diese Bewegung wird durch das zweite Sensorelement 236 erfasst, welches daraufhin ein entsprechendes Sensorsignal ausgibt.

Das erste Kollisionselement 120 und das erste Schieberelement 131 verbleiben hingegen in ihrer Ruhelage. Dies wird durch die drehbare Kopplung zwischen dem ersten Kollisionselement 120 und dem Koppelelement 300 sowie durch die verschiebbare Kopplung zwischen dem zweiten Kollisionselement 220 und dem Koppelelement 300 ermöglicht. Dadurch bleibt die Bewegung auf das zweite Kollisionselement 220 und das zweite Schieberelement 231 begrenzt.

In Fig. 11a ist die erste Ausführung des zweiten Detektoreinrichtung gezeigt, also bei der das zweite Schieberelement 231 mit zwei zweiten Zapfen 233, 234 geführt ist.

Das gleiche Verhalten des zweiten Schieberelementes 231 bei diesem Kraftangriff ergibt sich, wenn das zweite Schieberelement 231 mit nur einem Zapfen geführt wird (zweite Ausführung der zweiten Detektoreinrichtung). Dies liegt an der Kopplung von dem zweiten Kollisionselement 220 in dem Koppelelement 300 über das Langloch, aufgrund dessen bei dieser Kollision nur Kräfte vorwiegend entgegen der Fahrtrichtung übertragen werden können und damit auf das zweite Kollisionselement 220 kein nennenswerter Kraftanteil in seitliche Richtung wirkt, der das zweite Kollisionselement 220 verdreht.

Bei einer frontalen Kollision mit dem Koppelelement 300 im Bereich zwischen dem zweiten Kollisionselement 220 und dessen äußeren Ende (also im Außenbereich) verhält sich die Sicherheitsvorrichtung analog zu dem zuvor beschriebenen Szenario in Figur 11a.

Die Krafteinwirkung F führt dazu, dass sich das zweite Kollisionselement 220 und damit das zweite Schieberelement 231 entgegen der Bewegungsrichtung B des Waschportals 10 verschieben. Diese Bewegung wird durch das zweite Sensorelement 236 erfasst, welches daraufhin ein entsprechendes Sensorsignal ausgibt.

Das erste Kollisionselement 120 und das erste Schieberelement 131 verbleiben weiterhin in ihrer Ruhelage, da die drehbare Kopplung zwischen dem ersten Kollisionselement 120 und dem Koppelelement 300 sowie die verschiebbare Kopplung zwischen dem zweiten Kollisionselement 220 und dem Koppelelement 300 eine Bewegung auf das zweite Kollisionselement beschränken.

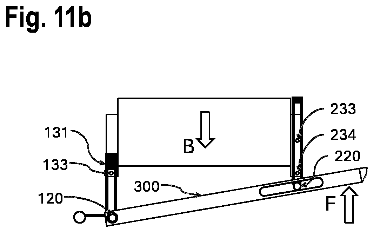

**Figur 11b** zeigt den gleichen Fall wie Figur 11a, nur dass die Kollision an der Koppelstange 300 nicht zwischen den beiden Kollisionselementen stattfindet, sondern in dem Bereich der Koppelstange, der über die Außenseite des Portals hinausragt, also im Außenbereich. Die Kraftrichtung, die sich bei der Kollision ergibt, verläuft entgegen der Bewegungsrichtung B. Das zweite Kollisionselement 220 fährt wie in Figur 11a linear ein, was vom Sensorelement erkannt wird und das erste Kollisionselement 120 ist von dieser Bewegung unabhängig.

In Fig. 11b ist die erste Ausführung der zweiten Detektoreinrichtung gezeigt, nämlich mit zwei zweiten Zapfen 233, 234.

Das gleiche Verhalten von dem zweiten Schieberelement 231 bei diesem Kraftangriff ergibt sich, wenn das zweite Schieberelement 231 mit nur einem Zapfen geführt wird (zweite Ausführung). Dies liegt an der Kopplung von dem zweiten Kollisionselement 220 in dem Koppelelement 300 über das Langloch, aufgrund dessen bei dieser Kollision nur Kräfte vorwiegend entgegen der Fahrtrichtung übertragen werden können und damit auf das zweite Kollisionselement 220 kein nennenswerter Kraftanteil in seitliche Richtung wirkt, der das zweite Kollisionselement 220 verdreht.

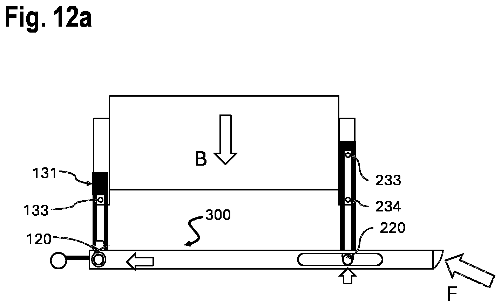

**Figur 12a** zeigt den Fall, in dem eine mechanische Kraft F auf das äußere Ende der Außenseite des Koppelelements 300 wirkt, also ebenfalls im Außenbereich. Diese Krafteinwirkung kann zu resultierenden Kraftkomponenten führen, die in Fig. 12a mit weiteren Pfeilen angedeutet sind.

Die Kraft, die sich bei Kollision von dem Kollisionsobjekt und dem ersten oder zweiten Kollisionselement bzw. dem Koppelelement ergibt, verläuft ohne Berücksichtigung von Reibungseffekten normal zu deren Oberfläche im Kontaktpunkt und enthält daher neben der Kraftkomponente entgegen der Fahrtrichtung einen Kraftanteil seitlich zur Kraftrichtung.

Der Anteil der Kraft, der parallel zur Bewegungsrichtung B des Waschportals 10 verläuft, wird über das Koppelelement 300 auf das zweite Kollisionselement 220 übertragen. Dadurch verschiebt sich das zweite Schieberelement 231 entgegen der Bewegungsrichtung B, wodurch die Kollision durch das zweite Sensorelement 236 detektiert wird. Dieser Kraftanteil bewirkt ein Moment in dem Koppelelement 300 um das zweite Kollisionselement 220. Dieses Moment bewirkt, dass eine Kraft auf das erste Kollisionselement 120 wirkt, die das erste Schieberelement 131 in Fahrtrichtung B drückt. Da sich das erste Schieberelement 131 bereits am Endanschlag im Langloch zum Zapfen 133 befindet, führt diese Kraft zu keiner Bewegung von dem ersten Kollisionselement 120.

Der seitliche Anteil der Kraft kann auf das erste Kollisionselement 120 übertragen werden. Aufgrund der konstruktiven Gestaltung des ersten Schieberelements 131 ist jedoch keine Bewegung in Richtung der Innenseite I möglich.

In Figur 12a ist der Fall gezeigt, dass das Koppelelement in Nullposition steht. Das zweite Kollisionselement 220 wird von der Koppelelement 300 im Langloch berührt. D.h. nur ein Kraftanteil in die Richtung entgegen der Fahrtrichtung des Wachportals wird übertragen. Das zweite Kollisionselement 220 fährt linear ein. Auch wenn die Kollisionskraft auf das Koppelelement 300 einen nennenswerten Anteil in Querrichtung hat, wirkt dieser nicht auf das zweite Schieberelement 231 .

Die Kraft in Querrichtung, hin zum Fahrzeug, wird komplett auf das erste Kollisionselement 120 übertragen, das in dieser Bewegungsrichtung starr ist.

Die Lagerelemente, insbesondere Zapfen, 233 und 234 sind so gestaltet, dass sie innerhalb der Führungseinrichtung, insbesondere in der Nullposition, mindestens ein geringes Spiel aufweisen. Da ausgehend vom Koppelelement über das Langloch nur eine Kraft vorwiegend entgegen der Fahrtrichtung B auf das zweite Kollisionselement 220 übertragen werden kann, wird die Linearführung über die Zapfen 233 und 234 nicht mit einer Querkraft belastet und kann daher durch eine Kollisionskraft auf das Koppelelement nicht verklemmen.

Das gleiche Verhalten von dem zweiten Schieberelement 231 bei diesem Kraftangriff ergibt sich, wenn das zweite Schieberelement 231 mit nur einem Zapfen geführt wird (zweite Ausführung). Dies liegt an der Kopplung von dem zweiten Kollisionselement 220 in dem Koppelelement 300 über das Langloch, aufgrund dessen bei dieser Kollision nur Kräfte vorwiegend entgegen der Fahrtrichtung übertragen werden können und damit auf das zweite Kollisionselement 220 kein nennenswerter Kraftanteil in seitliche Richtung wirkt, der letzteres verdreht.

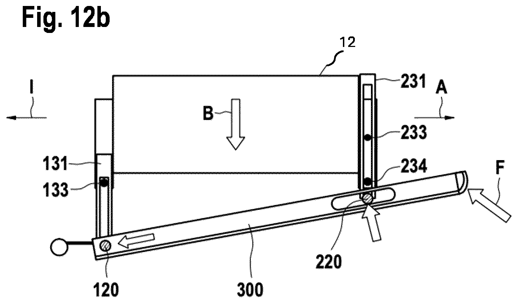

**Figur 12b** zeigt den Fall, dass durch das lineare Einfedern des zweiten Schieberelements 231 das Koppelelement 300 um einen kleinen Winkel schief gestellt wird. Dies hat zur Folge, dass die Kraftrichtung, die vom Langloch des Koppelelementes auf das zweite Kollisionselement 220 übertragen wird, nicht mehr exakt entgegen der Fahrtrichtung wirkt und auch einen kleinen Kraftanteil quer zum zweiten Schieberelement 231 hat. Da der Winkel, um den sich das Koppelelement schräg stellt, klein ist, ist diese seitliche Kraft auf das zweite Schieberelement klein und wird daher nicht zu einem Verklemmen der Linearführung über zwei Zapfen führen.

Das Koppelelement 300 ist mit dem ersten Kollisionselement 120 und dem zweiten Kollisionselement 220 so gekoppelt, dass eine Bewegung des Koppelelementes 300 das erste Kollisionselement 120 und/oder das zweite Kollisionselement 220 mitbewegt und dabei weder auf das erste Kollisionselement 120 noch auf das zweite Kollisionselement 220 eine Kraft ausübt, die zu einem Verklemmen der Führung an der jeweiligen Detektionseinrichtung oder zu einem Verklemmen in den Führungen zwischen dem Koppelelement und den Kollisionsstangen 120 und 220 führt.

Das gleiche Verhalten von dem zweiten Schieberelement 231 bei diesem Kraftangriff ergibt sich, wenn das zweite Schieberelement 231 mit nur einem Zapfen geführt wird (zweite Ausführung). Dies liegt an der Kopplung von dem zweiten Kollisionselement 220 in dem Koppelelement 300 über das Langloch, aufgrund dessen bei dieser Kollision nur Kräfte vorwiegend entgegen der Fahrtrichtung übertragen werden können und damit auf das zweite Kollisionselement 220 kein nennenswerter Kraftanteil in seitliche Richtung wirkt, der letzteres, also das zweite Kollisionselement 220, verdreht.

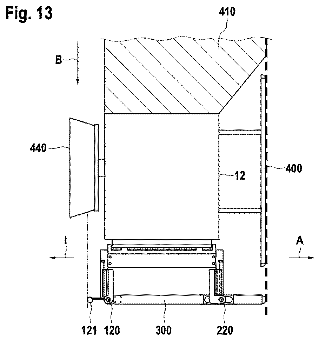

**Figur 13** zeigt eine schematische Draufsicht auf eine Stütze 12 eines Waschportals 10 mit einer Sicherheitsvorrichtung gemäß einer Ausführungsform.

In der Figur ist zu erkennen, dass sich die Sicherheitsvorrichtung mit den beiden Kollisionselementen 120, 220 und mindestens einem Koppelelement 300 in Bewegungsrichtung B vor der Stütze 12 befindet.

Das erste Kollisionselement 120 weist dabei einen Abschnitt 121 auf, der gegebenenfalls etwas weiter in Richtung Innenseite I ragt. Dies kann beispielsweise dazu dienen, ein in Bewegungsrichtung dahinter liegendes Aggregat, wie hier eine Radwaschbürste 440, in ausreichendem Maße abzusichern. Der Abschnitt 121 kann dabei so weit in Richtung Innenseite ragen, wie die starren Elemente des nachgelagerten Aggregats ebenfalls in diese Richtung hervorstehen.

Weiterhin ist zu erkennen, dass sich auch in Richtung Außenseite A einige Bauteile 410 des Waschportals 10 befinden, die in Bewegungsrichtung B nach hinten versetzt über die Breite der Stütze 12 hinausragen. Dabei kann es sich beispielsweise um einen Spritzschutz für eine Waschbürste oder andere herausragende Komponenten handeln. Entsprechend kann das Koppelelement 300 bzw. die Koppelelemente 300 mindestens ebenso weit in Richtung Außenseite A herausragen, um auch die nachlaufenden herausragenden Bauteile des Waschportals ausreichend abzusichern.

Um während des Betriebs zu verhindern, dass beispielsweise eine Person die vorgelagerten Koppelelemente 300 umgeht und anschließend in den Zwischenraum zwischen dem Koppelelement 300 und den nachgelagerten herausragenden Bauteile 410 tritt, kann dieser Zwischenbereich durch geeignete Schutzelemente 400, wie Stangen, Gitter oder Platten, abgesichert werden.

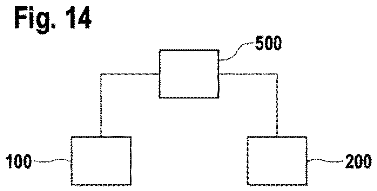

**Figur 14** zeigt eine schematische Darstellung eines Blockschaltbildes für das Steuerungskonzept einer Sicherheitsvorrichtung einer Portalwaschanlage gemäß einer Ausführungsform.

Wie in Figur 14 veranschaulicht, können die erste Kollisionserkennungseinrichtung 100 und die zweite Kollisionserkennungseinrichtung 200 bei der Detektion eines Kollisionsereignisses jeweils eine Signalisierung ausgeben. Diese Signalisierung wird insbesondere an eine Steuereinrichtung 500 übermittelt.

Empfängt die Steuereinrichtung 500 eine solche Signalisierung von mindestens einer der Kollisionserkennungseinrichtungen, kann sie daraufhin eine Notabschaltung der Portalwaschanlage veranlassen. Alternativ kann die Bewegung des Waschportals 10 gestoppt werden.

Das Stoppen des Waschportals kann in einer einfachen Variante durch ein Abschalten des Antriebs erfolgen. Alternativ kann ein aktiver Bremsvorgang eingeleitet werden, um die Bewegung des Waschportals schneller zum Stillstand zu bringen. Eine solche aktive Bremsung kann die Sicherheit weiter erhöhen, indem sie den Bremsweg verkürzt und somit die Gefahr von Beschädigungen oder Verletzungen bei einer Kollision reduziert.

Die Steuereinrichtung 500 kann entweder in die Gesamtsteuerung der Portalwaschanlage integriert oder als separate Steuereinheit ausgeführt sein.

In der integrierten Variante übernimmt die Steuereinrichtung 500 die Verarbeitung der Signale aus den Kollisionserkennungseinrichtungen 100, 200 innerhalb der allgemeinen Steuerarchitektur der Waschanlage und kann direkt mit den übrigen Steuerkomponenten kommunizieren.

Alternativ kann die Steuereinrichtung 500 als eigenständige Steuerungseinheit realisiert sein, die unabhängig von der Hauptsteuerung der Waschanlage arbeitet. Diese dezentrale Lösung kann die Sicherheit zusätzlich erhöhen, da sie auch dann zuverlässig arbeiten kann, wenn in der übergeordneten Steuerung der Portalwaschanlage eine Fehlfunktion auftritt.

Die Steuereinrichtung 500 kann zumindest teilweise in Software implementiert sein. In diesem Fall umfasst sie ein entsprechendes Computerprogramm, das in einem nichtflüchtigen Speicher abgelegt ist. Dieses Programm kann von einem Prozessor, beispielsweise einem Mikrocontroller, geladen und ausgeführt werden, um die erforderlichen Steuerungs- und Sicherheitsfunktionen zu realisieren.

Alternativ kann die Steuereinrichtung 500 auf Hardwarebasis mit diskreten elektrischen und elektronischen Bauelementen realisiert sein. Dabei können beispielsweise Widerstände, Dioden, Transistoren, Relais oder integrierte Schaltungen verwendet werden, um die Signale aus den Kollisionserkennungseinrichtungen 100, 200 auszuwerten und die entsprechenden Steuerbefehle für die Notabschaltung des Waschportals 10 auszugeben.

In einer hybriden Ausführung kann die Steuereinrichtung 500 sowohl hardwarebasierte Sicherheitsmechanismen als auch softwarebasierte Steuerungsalgorithmen kombinieren, um eine robuste und fehlertolerante Sicherheitsarchitektur zu gewährleisten.

Die vorliegende Erfindung schafft eine Sicherheitsvorrichtung für eine Portalwaschanlage, die eine frühzeitige Erkennung von Kollisionen mit einem Kollisionskörper, insbesondere einer Person, ermöglicht. Die Sicherheitsvorrichtung umfasst eine erste und eine zweite Kollisionserkennungseinrichtung, die jeweils ein Kollisionselement und eine Detektoreinrichtung umfassen. Die Detektoreinrichtungen erlauben eine Erfassung einer Verlagerung der Kollisionselemente bei einer Krafteinwirkung, sodass eine Kollision detektiert werden kann.

Mindestens ein Koppelelement verbindet die beiden Kollisionselemente mechanisch, wobei die mechanische Kopplung so ausgestaltet ist, dass sich die Kollisionselemente unabhängig voneinander bewegen können. Gleichzeitig ermöglicht das Koppelelement, dass eine Krafteinwirkung auf das Koppelelement an mindestens eines der Kollisionselemente weitergegeben wird, wodurch auch eine Kollision mit dem Koppelelement zuverlässig erkannt werden kann.

Eine Steuereinrichtung empfängt Signale aus den Kollisionserkennungseinrichtungen und kann bei einer detektierten Kollision die Bewegung des Waschportals stoppen, um Beschädigungen oder Verletzungen zu vermeiden. Die Steuereinrichtung kann dabei in die Gesamtsteuerung der Waschanlage integriert oder als separate Steuereinheit ausgeführt sein, um eine zusätzliche Sicherheit zu gewährleisten.

Die Kombination aus lokalen Kollisionserkennungseinrichtungen und Koppelelementen ermöglicht eine effektive Erfassung eines erweiterten Gefahrenbereichs und verbessert so die Sicherheit des Waschportals insbesondere im Hinblick auf den Schutz von Personen.

Zusammenfassend betrifft die vorliegende Erfindung somit eine Sicherheitsvorrichtung für eine Portalwaschanlage mit einem entlang einer Bewegungsrichtung fahrbaren Waschportal. Die Vorrichtung umfasst eine erste und eine zweite Kollisionserkennungseinrichtung, die jeweils ein Kollisionselement und eine Detektoreinrichtung enthalten. Die Detektoreinrichtungen sind mechanisch mit den Kollisionselementen gekoppelt und dazu ausgebildet, bei einer Krafteinwirkung eine horizontale Verlagerung (inklusive rotatorischer oder translatorischer Bewegung der Schieberelemente) von den Kollisionselementen oder von mit ihnen fest verbundenen Schieberelementen zu ermöglichen und diese Bewegung zu detektieren.

Mindestens ein Koppelelement verbindet die beiden Kollisionselemente mechanisch beweglich und überträgt eine auf das Koppelelement einwirkende mechanische Kraft zumindest teilweise auf eines oder beide Kollisionselemente. Dadurch kann eine Kollision sowohl direkt an den Kollisionselementen als auch am Koppelelement erkannt werden, um eine frühzeitige Detektion von Hindernissen oder Personen im Bewegungsbereich des Waschportals zu ermöglichen.

Mindestens ein insbesondere horizontales Koppelelement verbindet die beiden insbesondere vertikalen Kollisionselemente mechanisch beweglich und überträgt eine auf das Koppelelement einwirkende mechanische Kraft, insbesondere verursacht durch eine Kollision der Sicherheitsvorrichtung mit einem Kollisionskörper, zumindest teilweise auf eines oder beide Kollisionselemente. Dadurch kann eine Kollision sowohl direkt an den Kollisionselementen als auch am Koppelelement erkannt werden, um eine frühzeitige Detektion von Hindernissen oder Personen im Bewegungsbereich des Waschportals zu ermöglichen.

## Patentansprüche

1. Sicherheitsvorrichtung für eine Portalwaschanlage mit einem entlang einer Bewegungsrichtung (B) fahrbaren Waschportal (10), die insbesondere ausgebildet ist, eine Kollision der Portalwaschanlage oder deren Bauteilen und einem Kollisionskörper zu vermeiden, wobei die Sicherheitsvorrichtung umfasst:
- eine erste Kollisionserkennungseinrichtung (100) mit
∘ einem ersten Kollisionselement (120); und
∘ einer ersten Detektoreinrichtung (130), die mechanisch mit dem ersten Kollisionselement (120) gekoppelt ist und die dazu ausgebildet ist, bei einem Einwirken einer mechanischen Kraft (F) auf das erste Kollisionselement (120) eine vorzugsweise horizontale Verlagerung des ersten Kollisionselements (120) zu ermöglichen und das Einwirken der mechanischen Kraft (F) auf das erste Kollisionselement (120) zu detektieren;
- eine zweite Kollisionserkennungseinrichtung (200) mit
∘ einem zweiten Kollisionselement (220); und
∘ einer zweiten Detektoreinrichtung (230), die mechanisch mit dem zweiten Kollisionselement (220) gekoppelt ist und die dazu ausgebildet ist, bei einem Einwirken einer mechanischen Kraft (F) auf das zweite Kollisionselement (220) eine vorzugsweise horizontale Verlagerung des zweiten Kollisionselements (220) entgegen der Bewegungsrichtung (B) des Waschportals (10) zu ermöglichen und das Einwirken der mechanischen Kraft (F) auf das zweite Kollisionselement (220) zu detektieren;
- mindestens ein Koppelelement (300), das jeweils mechanisch mit dem ersten Kollisionselement (120) und dem zweiten Kollisionselement (220) gekoppelt ist, wobei das mindestens eine Koppelelement (300) jeweils beweglich mit dem ersten Kollisionselement (120) und dem zweiten Kollisionselement (220) gekoppelt ist und dazu ausgebildet ist, eine auf das Koppelelement (300) einwirkende mechanische Kraft (F) zumindest teilweise auf das erste Kollisionselement (120) und/oder das zweite Kollisionselement (220) zu übertragen, insbesondere wenn das Koppelelement (300) mit zumindest einem Kollisionskörper kollidiert.

2. Sicherheitsvorrichtung nach Anspruch 1,
wobei die mechanische Kopplung zwischen dem ersten Kollisionselement (120) und dem mindestens einen Koppelelement (300) sowie die mechanische Kopplung zwischen dem zweiten Kollisionselement (220) und dem mindestens einen Koppelelement (300) jeweils derart ausgestaltet ist, dass sich das erste Kollisionselement (120) und das zweite Kollisionselement (220) bei einer mechanischen Krafteinwirkung (F) auf das jeweilige Kollisionselement (120, 220) unabhängig voneinander bewegen können.

3. Sicherheitsvorrichtung nach einem der vorstehenden Ansprüche,
wobei das mindestens eine Koppelelement (300) mit dem ersten Kollisionselement (120) drehbar, insbesondere im Wesentlichen horizontal drehbar, insbesondere um eine vertikale Achse drehbar, gekoppelt ist; und/oder
wobei das mindestens eine Koppelelement (300) mit dem zweiten Kollisionselement (220) verschiebbar, insbesondere im Wesentlichen drehbar und horizontal verschiebbar, gekoppelt ist.

4. Sicherheitsvorrichtung nach einem der vorstehenden Ansprüche,
wobei das mindestens eine Koppelelement (300) auf einer Innenseite (I), die einem zu reinigenden Objekt zugewandt ist und an der die erste Kollisionserkennungseinrichtung (100) vorgesehen ist, vorzugsweise weitgehend bündig mit dem ersten Kollisionselement (120) abschließt.

5. Sicherheitsvorrichtung nach einem der vorstehenden Ansprüche,
wobei das mindestens eine Koppelelement (300) auf einer Außenseite (A), die der Innenseite (I) gegenüberliegt und an der die zweite Kollisionserkennungseinrichtung (200) vorgesehen ist, mit einem vorgegebenen Überstand über das zweite Kollisionselement (220) hinausragt.

6. Sicherheitsvorrichtung nach einem der vorstehenden Ansprüche,
wobei die Sicherheitsvorrichtung mindestens zwei Koppelelemente (300) umfasst.

7. Sicherheitsvorrichtung nach einem der vorstehenden Ansprüche,
wobei die erste Kollisionserkennungseinrichtung (100) eine erste Aufhängeeinrichtung (110) umfasst, die oberhalb des ersten Kollisionselements (120) angeordnet ist und dazu ausgebildet ist, das erste Kollisionselement (120) zu halten, sodass es vertikal herabhängt und relativ zur ersten Aufhängeeinrichtung (110) eine horizontale Pendelbewegung, insbesondere eine Pendelbewegung im Wesentlichen in einer horizontalen Ebene, ausführen kann; und/oder
wobei die zweite Kollisionserkennungseinrichtung (200) eine zweite Aufhängeeinrichtung (210) umfasst, die oberhalb des zweiten Kollisionselements (220) angeordnet ist und dazu ausgebildet ist, das zweite Kollisionselement (220) zu halten, sodass es vertikal herabhängt und relativ zur zweiten Aufhängeeinrichtung (210) eine horizontale Pendelbewegung, insbesondere eine Pendelbewegung im Wesentlichen in einer horizontalen Ebene, ausführen kann.

8. Sicherheitsvorrichtung nach einem der vorstehenden Ansprüche,
wobei die erste Detektoreinrichtung (130) ein erstes Schieberelement (131) umfasst, welches mit dem ersten Kollisionselement (120) mechanisch verbunden ist, und welches dazu ausgebildet ist, bei einer Krafteinwirkung mit einer vektoriellen Komponente entgegen der Bewegungsrichtung (B) des Waschportals (10) relativ zu diesem eine lineare Bewegung entgegen dessen Bewegungsrichtung (B) auszuführen und/oder bei einer Krafteinwirkung mit einer vektoriellen Komponente senkrecht zur Bewegungsrichtung (B) des Waschportals (10) eine Schwenkbewegung, insbesondere eine Schwenkbewegung weg von einem zu reinigenden Objekt (20), auszuführen; und/oder
wobei die zweite Detektoreinrichtung (230) ein zweites Schieberelement (231) umfasst, welches mit dem zweiten Kollisionselement (220) mechanisch verbunden ist, und welches dazu ausgebildet ist, bei einer Krafteinwirkung mit einer vektoriellen Komponente entgegen der Bewegungsrichtung (B) des Waschportals (10) relativ zu diesem eine lineare Bewegung entgegen dessen Bewegungsrichtung (B) auszuführen, jedoch bei einer Krafteinwirkung mit einer horizontalen vektoriellen Komponente senkrecht zur Bewegungsrichtung (B) des Waschportals (10) keine signifikante Schwenkbewegung ausführt.

9. Sicherheitsvorrichtung nach den einem der Ansprüche 1 bis7,
wobei die erste Detektoreinrichtung (130) ein erstes Schieberelement (131) umfasst, welches mit dem ersten Kollisionselement (120) mechanisch verbunden ist, und welches dazu ausgebildet ist, bei einer Krafteinwirkung mit einer vektoriellen Komponente entgegen der Bewegungsrichtung (B) des Waschportals (10) relativ zu diesem eine lineare Bewegung entgegen dessen Bewegungsrichtung (B) auszuführen und/oder bei einer Krafteinwirkung mit einer vektoriellen Komponente senkrecht zur Bewegungsrichtung (B) des Waschportals (10) eine Schwenkbewegung, insbesondere eine Schwenkbewegung weg von einem zu reinigenden Objekt (20), auszuführen; und/oder
wobei die zweite Detektoreinrichtung (230) ein zweites Schieberelement (231) umfasst, welches mit dem zweiten Kollisionselement (220) mechanisch verbunden ist, und welches dazu ausgebildet ist, bei einer Krafteinwirkung mit einer vektoriellen Komponente entgegen der Bewegungsrichtung (B) des Waschportals (10) relativ zu diesem eine lineare Bewegung entgegen dessen Bewegungsrichtung (B) auszuführen und/oder bei einer Krafteinwirkung mit einer horizontalen vektoriellen Komponente senkrecht zur Bewegungsrichtung (B) des Waschportals (10) eine Schwenkbewegung, insbesondere eine Schwenkbewegung hin zu einem zu reinigenden Objekt (20), auszuführen.

10. Sicherheitsvorrichtung nach Anspruch 8 oder 9,
wobei eine maximale Strecke der linearen Bewegung des ersten Schieberelements (131) und/oder des zweiten Schieberelements (231) bei einer Krafteinwirkung mit einer vektoriellen Komponente entgegen der Bewegungsrichtung (B) des Waschportals (10) größer ist als ein Bremsweg des Waschportals (10).

11. Sicherheitsvorrichtung nach einem der vorstehenden Ansprüche 8 bis 10,
wobei die erste Detektoreinrichtung (130) eine erste Rückstelleinrichtung (139) umfasst, die das erste Schieberelement (131) mit einer vorgegebenen Rückstellkraft (135) in einer Ausgangsposition hält, insbesondere solange keine externe Kraft auf das erste Schieberelement (131) einwirkt, und/oder
wobei die zweite Detektoreinrichtung (230) eine zweite Rückstelleinrichtung (239) umfasst, die das zweite Schieberelement (231) mit einer vorgegebenen Rückstellkraft (235) in einer Ausgangsposition hält, insbesondere solange keine externe Kraft auf das zweite Schieberelement (231) einwirkt.

12. Sicherheitsvorrichtung nach einem der vorstehenden Ansprüche 8 bis 11,
wobei das erste Schieberelement (131) in einer ersten Führungseinrichtung (132) mit einem ersten Langloch oder einer vergleichbaren ersten Öffnung geführt ist, und wobei das erste Schieberelement (131) durch ein erstes Lagerelement (133), insbesondere einen ersten Zapfen, in der ersten Führungseinrichtung (132) gelagert ist und eine Längsbewegung sowie eine Schwenkbewegung ausführen kann.

13. Sicherheitsvorrichtung nach einem der vorstehenden Ansprüche 8 bis 12,
wobei das zweite Schieberelement (231) in einer zweiten Führungseinrichtung (232) mit einem zweiten Langloch oder einer vergleichbaren zweiten Öffnung geführt ist, und wobei das zweite Schieberelement (231) durch zwei zweite Lagerelemente (233, 234), insbesondere zwei zweite Zapfen, in der zweiten Führungseinrichtung (232) gelagert ist, wobei die zwei zweiten Lagerelemente (233, 234) im Wesentlichen eine lineare Bewegung des zweiten Schieberelements (231) ermöglichen.

14. Sicherheitsvorrichtung nach Anspruch 13,
wobei mindestens eines der zwei zweiten Lagerelemente (233, 234) einen reduzierten Durchmesser im Vergleich zur zweiten Führungseinrichtung (232) aufweist, um eine begrenzte seitliche Relativbewegung zu ermöglichen.

15. Sicherheitsvorrichtung nach einem der vorstehenden Ansprüche,
wobei das erste Kollisionselement (120) zumindest teilweise eine Kontur für einen maximalen Behandlungsraum für das zu reinigende Objekt widerspiegelt und insbesondere in Bereichen mit seitlichen Aggregaten oder anderen Komponenten der Portalwaschanlage eine angepasste Form aufweist.

16. Sicherheitsvorrichtung nach einem der vorstehenden Ansprüche,
wobei das mindestens eine Koppelelement (300) in Richtung der Außenseite (A) eine seitliche Erstreckung aufweist, die über die vertikale Projektion einer Stütze (12) des Waschportals (10) hinausgeht, um insbesondere seitlich herausragende Aggregate oder andere Komponenten des Waschportals (10) abzudecken.

17. Sicherheitsvorrichtung nach einem der vorstehenden Ansprüche,
wobei die erste Kollisionserkennungseinrichtung (100) ein erstes Sensorelement (136) umfasst, das dazu ausgelegt ist, eine Bewegung des ersten Kollisionselements (120) zu detektieren,
und wobei die zweite Kollisionserkennungseinrichtung (200) ein zweites Sensorelement (236) umfasst, das dazu ausgelegt ist, eine Bewegung des zweiten Kollisionselements (220) zu detektieren.

18. Sicherheitsvorrichtung nach einem der vorstehenden Ansprüche,
mit einer Steuereinrichtung (500), die dazu ausgebildet ist, die Bewegung des Waschportals (10) zu stoppen, falls eine Bewegung des ersten Kollisionselements (120) oder des zweiten Kollisionselements (220) detektiert wird.

19. Waschportal (10) mit einer Sicherheitsvorrichtung nach einem der vorstehenden Ansprüche.

20. Waschportal (10) nach Anspruch 19,
wobei zwischen dem zweiten Kollisionselement (220) mit den Koppelelementen (300) und in Bewegungsrichtung (B) gesehen weiter hinten angeordneten Komponenten des Waschportals (10) mindestens ein Schutzelement (400) in Form einer Stange, Platte oder eines vergleichbaren Elements vorgesehen ist, das sich zwischen diesen Komponenten zumindest teilweise erstreckt.

21. Portalwaschanlage mit einem Waschportal (10) nach einem der Ansprüche 19 oder 20.
